# EUROPÄISCHE PATENTSCHRIFT

(11) **EP 3 867 572 B1**
(45) Veröffentlichungstag und Bekanntmachung des Hinweises auf die Patenterteilung: **23.10.2024**
(21) Anmeldenummer: 19789883.6
(22) Anmeldetag: 08.10.2019
(51) Int. Cl.: F23D 14/20, F23D 14/48, F23D 14/58, F23D 14/78, F23D 14/84, F23M 5/02

(54) **BRENNGASINJEKTOR, SYSTEM AUS KERAMISCHEM WANDUNGSELEMENT MIT EINER KERAMISCHEN INJEKTOREINSATZÖFFNUNG ZUM EINSATZ EINES BRENN-GASINJEKTORS FÜR EINEN INDUSTRIEOFEN**
COMBUSTION GAS INJECTOR, SYSTEM CONSISTING OF A CERAMIC WALL ELEMENT WITH A CERAMIC INJECTOR INSERT OPENING FOR INSERTING A COMBUSTION GAS INJECTOR FOR AN INDUSTRIAL FURNACE
INJECTEUR DE GAZ COMBUSTIBLE, SYSTÈME D'ÉLÉMENT DE PAROI EN CÉRAMIQUE COMPORTANT UNE OUVERTURE D'INSERTION D'INJECTEUR EN CÉRAMIQUE POUR L'UTILISATION D'UN INJECTEUR DE GAZ COMBUSTIBLE D'UN FOUR INDUSTRIEL

(30) Priorität: 18.10.2018 DE 102018125872
(43) Veröffentlichungstag der Anmeldung: 25.08.2021
(73) Patentinhaber: Flammatec, Spol. S.R.O., 75501 Vsetin (CZ)
(72) Erfinder: BIRLE, Andreas, 03046 Cottbus (DE); CHMELAR, Josef, 75501 Vsetin (CZ); NEFF, Glenn, Dade City, Florida 33523 (US); VOJTECH, Petr, 39811 Protivin (CZ)
(74) Vertreter: Eisenführ Speiser
(86) Internationale Anmeldenummer: PCT/EP2019/077213
(87) Internationale Veröffentlichungsnummer: WO 2020/078775

(56) Entgegenhaltungen:
- WO-A1-2011/151735
- WO-A1-2011/151735
- DE-A1- 10 224 769
- DE-A1- 10 224 769
- US-A- 5 725 367
- US-A- 5 725 367
- US-A1- 2001 023 053
- US-A1- 2001 023 053

## Beschreibung

Die Erfindung betrifft einen Gasbrenner bzw. Gasinjektor, nämlich einen Brenngasinjektor gemäß dem Anspruch 1. Der Brenngasinjektor ist ausgebildet zur Befeuerung eines regenerativ oder rekuperativ beheizten Industrieofens mit einem Gaszuführungsrohr und einer Mündung, wobei deren Verbindung mit einem Langdiffusor mit einem Freistrahlöffnungswinkel gebildet ist, wobei der Langdiffusor ein die Mündung ausbildendes und metallisches, kühlbares Diffusorrohr aufweist, das dazu vorgesehen ist, zu der keramischen Injektoreinsatzöffnung einen Abschluss an der Mündung des Brenngasinjektors zu bilden. Die Erfindung betrifft auch ein System eines keramischen Wandungselements eines regenerativ oder rekuperativ beheizten Industrieofens mit einer keramischen Injektoreinsatzöffnung, ausgebildet zum Einsatz eines Brenngasinjektors und einem, insbesondere eingesetzten, Brenngasinjektor. Die Erfindung betrifft auch einen Industrieofen mit dem Brenngasinjektor.

Ein eingangs genannter Brenngasinjektor ist bekannt aus EP 1 730 442 B1; dieser ist durch Stellhandlungen in weitem Bereich als Freistrahlbrenner modifizierbar und besonders für Industrieöfen mit regenerativer Luftvorwärmung geeignet, insbesondere denjenigen, die eine getrennt vom Brenngas angeordnete Luftzuführung aufweisen. Auch die US 5 725 367 A offenbart einen verwandten Brenngasinjektor. Dieser Injektor wird von der Verbrennung zugeführtem Oxidationsmittel gekühlt.

Es ist bekannt, dass primäre NOx-Minderungsmaßnahmen bei konventionell beheizten Hochtemperaturwannenöfen, insbesondere bei Glasschmelzwannen, besonders wirkungsvoll bei der Technologie der Brennstoffeinbringung greifen. Es wurden zwar auch große Anstrengungen unternommen, um die Ofengeometrien und das Design der Verbrennungsluftzuführung hinsichtlich des Schadstoffausstoßes zu optimieren, aber nicht zuletzt auf Grund der hohen Anlagenlaufzeiten von mehr als 10 Jahren, in denen bauliche Verhältnisse festgelegt sind, greifen diese Maßnahmen erst sehr spät, sind in ihrer Anzahl stark begrenzt und Fehlentwicklungen können erst nach Ende der Ofenreise rückgängig gemacht werden. Weiterhin ist bekannt, dass primäre NOx-Minderungsmaßnahmen, wenn technologisch richtig angewendet, mit Energieeinsparung, Leistungssteigerung, Laufzeitverlängerung und Qualitätssicherung verbunden sind, jedoch auch Maß an Sensorik und intelligenter Automation sowie Aufmerksamkeit des Betreiberpersonals erfordern, um das erreichte hohe Niveau der Effektivität und Schadstoffminderung zu halten.

Vorliegend geht es somit weniger um Brenner wie in WO 2004/094910, die in Fig. 4 und Seite 9, Zeile 27 bis Seite 10 Zeile 12 einen Brenner für pulverisierte Kohle oder andere feste Brennstoffe zur Produktion von Wärme für verschiedene industrielle Zwecke beschreibt. Dor weist eine Sauerstoffbrennstoffdüse Sauerstoffinjektionslöcher auf und eine Sauerstoffbrennstoffauslassöffnung. Die Löcher leiten Sauerstoff von einer Sauerstoffzuführungspassage durch Auslassöffnungen, die in einer inneren zylindrischen Oberfläche gebildet sind. Die Sauerstoffflusspassage leitet den Sauerstoff in eine Sauerstoffbrennstoffpassage, um diesen mit festem Brennstoff aus einem Brennstoffrohr zu mischen zu einem verbrennbaren Sauerstoffgemisch in der Passage und um dieses durch die Mündung abzugeben. Jedes der Sauerstoffinjektionslöcher ist angewinkelt und umfänglich beabstandet entlang einer kegelstumpfartigen Anordnung, wie dies in FIG. 4 der WO 2004/094910 gezeigt ist.

Vielmehr ist vorliegend ein eingangs genannter Brenngasinjektor, wie er grundsätzlich bekannt ist aus EP 1 730 442 B1, Gegenstand der Anmeldung zur Befeuerung eines regenerativ oder rekuperativ beheizten Industrieofens mit einem Gaszuführungsrohr und einer Mündung, wobei deren Verbindung mit einem Langdiffusor mit einem Freistrahlöffnungswinkel gebildet ist.

Ähnlich ist dem Grundgedanken der NOx-Minderung bei Hochtemperaturprozessen, wie der Glasschmelze, folgend aus DE 195 20 650 A1 Brenner-Düsenstein-Kombinationen und aus DE 102 24 769 Freistrahlbrenner mit Öffnungswinkel um 20° und minimalem Mündungsdurchmesser von 70 mm in zylindrischer Brennereinsatzbohrung ohne nachgeordneten Düsenstein bekannt geworden, die durch niederturbulente Brenngaseinbringung eine verzögerte Mischung von Brenngas und Verbrennungsluft erzeugen und mit abgesenkten Flammenwurzeltemperaturen in einzelnen Anwendungen bezogen auf das Ausgangsniveau akzeptable NOx-Minderungseffekte erzielt haben. Konstruktionen wie in DE 102 24 769 weisen jedoch keinerlei Möglichkeiten auf, auf Durchsatzschwankungen des typischen Leistungsbereiches zu reagieren, sondern sind mit turbulenzerzeugenden Zentraldüsen ausgestattet, die innen am Gaszuführungsrohr anliegend nur in vorderer Position wirksam sind und dort eine schnelle Entfernung vom NOx-mindernden Betrieb verursachen. Die alleinige Verringerung des Querschnittes der Diffusorwurzel reicht nicht aus, um die technologisch erforderliche Flammenform in Richtung und Länge auf veränderte Brennstoffdurchsätze anzupassen.

Bei geringem Durchsatz besteht somit das Problem, dass die Gasaustrittsgeschwindigkeit drastisch absinkt, wodurch die separat zugeführte Verbrennungsluft durch ihren deutlich höheren Impuls den Gasstrahl in der Weise zu stören vermag, dass die Freistrahlcharakteristik verloren geht und die gewünschte Positionierung der Flamme zum Wärmegut, die durch Richtung und Länge bestimmt ist, nicht mehr aktiv beeinflusst werden kann. Im extremen Fall saugt sich die Verbrennungsluft das Brenngas aus der Injektormündung und die ursprünglich beabsichtigte verzögerte Mischung und Startreaktion tritt bereits unmittelbar an der Abrisskante der Verbrennungsluftzuführung ein. Der Vorteil der bisher bekannt gewordenen Lösung, die Injektormündung ohne nachgeordneten Brenner-Düsenstein im Verbrennungsraum anzuordnen, um den Kontakt des intermittierend zugeführten Brenngases mit dem Feuerfestmaterial zu vermeiden, wie es in der Ausführung DE 195 20 650 A1 auftritt, ist damit aufgehoben.

Aus EP 0 513 414 B1 sind Vorrichtungen bekannt, die durch axial verschiebbare konische Düsen unmittelbar an der Hauptaustrittsdüse verschiedene Strömungsverhältnisse realisieren. Lösungen wie in EP 0 513 414 B1 sind jedoch mit dem Nachteil behaftet, dass der mit aufwendigen konischen Düsen einzustellende Gasstrahl nicht mit den zur optimalen verzögerten Mischung erforderlichen Auslaufstrecken ausgestattet ist und der nachgeordnete Düsenstein zusätzlich Turbulenzen verursacht.

Die Technologie der Brenngaseinbringung relativ zur baulich langfristig fixierten Luftzuführung ist bei den bekannten Lösungen also mit teilweise erheblichen Nachteilen behaftet, die Gefahren für das Feuerfestmaterial und somit für die Produktqualität und die Anlagenlaufzeit hervorrufen oder die einen NOx-mindernden Betrieb in nur engem Bereich erlauben. Somit sind die bekannten Lösungen den gestiegenen Anforderungen an die Qualität der Wärmeübertragung der Flamme an das Wärmegut, das Maß der NOx-Minderung und die Flexibilität der Befeuerung einer modernen Produktionsanlage nicht mehr gewachsen. Mit zunehmender Annäherung an das thermodynamische Optimum von Wärmeübertragung und Schadstoffminderung steigt der Bedarf an einfachen, beherrschbaren und reproduzierbaren Instrumenten, dieses Optimum stabil zu halten und die Vorteile voll in ökonomischen und ökologischen Nutzen umzusetzen.

Mit Vorteil versehen ist dagegen grundsätzlich der in der eingangs genannten EP 1 730 442 B1 beschriebene Brenngasinjektor. Dieser hat ein Gaszuführungsrohr und eine Mündung, wobei deren Verbindung mit einem Langdiffusor mit einem Freistrahlöffnungswinkel gebildet ist - diese sind allesamt insgesamt runden Querschnitts. Der Langdiffusor weist dazu ein die Mündung ausbildendes und metallisches, kühlbares Diffusorrohr runden Querschnitts auf, das dazu vorgesehen ist, zu der keramischen Injektoreinsatzöffnung einen, vorzugsweise kontaktfreien, Abschluss an der Mündung des Brenngasinjektors zu bilden. Die oben genannten Nachteile des Standes der Technik sind dabei vermieden und gleichzeitig sind Vorteile eines ungestörten Freistrahls bei gleichzeitiger Erweiterung des Arbeitsbereiches aufrechterhalten. Es gelingt vielmehr dem Gasstrom eine niederturbulente Freistrahlcharakteristik zu verleihen, ohne die erwähnten Nachteile in Kauf nehmen zu müssen.

Ein Brennersystem, wie es unabhängig davon in EP 1 094 273 B1 beschrieben ist, weist einen Sauerstoffbrennstoffbrenner als auch einen daran angebrachten Vorverbrenner auf, um eine Flamme zu erzeugen, wobei der Vorverbrenner einen ersten Durchgang mit einem Einlass an einem Brennerende des Vorverbrenners hat, wobei sich der Einlass in fluiddichter Beziehung zu einem Flammenende des Brenners befindet und mit einem Auslass an einem Auslassende des Vorverbrenners ist, wobei der Auslauf angepasst ist, um die von dem Brenner erzeugte Flamme zur Erwärmung unter Industriebedingungen in einer im Allgemeinen flachen, fächerartigen Konfiguration zu richten. Dazu gibt es einen getrennten zweiten Durchgang in dem Vorverbrenner, der unter dem ersten Durchgang angeordnet ist und sich gemeinsam mit diesem erstreckt, wobei der zweite Durchgang in einem Düsenende in dem Auslassende des Vorverbrenners endet, um ein oxidierendes fluides Medium unter und im Allgemeinen parallel zu der Flamme zu richten. In dieser speziellen im Allgemeinen flachen, fächerartigen Konfiguration kommt vor allem das Zusammenspiel von Vorverbrenner und Brenner zum Ausdruck.

Weiter ist in WO 2011/151735 A1 ein dort als Brenner bezeichneter Injektor für eine Glasschmelzwanne mit einem Gaszuführungsrohr offenbart, das schlitzartig am Flammenerzeugungspunkt ausgebildet ist. Der schlitzartige Flammenbildungsauslass hat eine erste Länge und Höhe, wobei ein Verhältnis zwischen der ersten Länge und Höhe definiert ist, um den Querschnitt in etwa zu dimensionieren, wobei das Verhältnis größer als 60 sein soll. Bei einer solchen, fast schon extremen Schlitzbreite im Vergleich zur vergleichsweise geringen Höhe steht eine Flammenstabilität in Frage. Der Injektor wird unter anderem-wie in FIG. 5 der WO 2011/151735 gezeigt-- mit seiner schlitzartig ausgebildeten Düse hinter --das heißt an einer Rückseite eines keramischen Wandungselements für einen Industrieofen-- mittels einer Kühlplatte befestigt. Das keramische Wandungselement bildet ab dem Flammenausgang an der Flachdüse die oben genannte extreme Schlitzbreite aus und ist in einer Passage geführt, wobei sich die Flamme innerhalb der Passage ähnlich eines Freistrahls entwickeln kann und bei sehr langsamen Geschwindigkeiten kann es mit hinzutretendem Fehlerfall zu einer Selbstentzündung führen bei Höchsttemperaturen.

Wünschenswert ist es, einen Brenngasinjektor der eingangs genannten Art, das heißt mit Freistrahlcharakteristik, so zu gestalten, dass dieser eine im Allgemeinen flache, fächer- oder flächenartige Konfiguration einer Flamme zu bilden in der Lage ist; dies allerdings unter Vermeidung der im Stand der Technik ersichtlichen Nachteile.

An dieser Stelle setzt die Erfindung an, deren Aufgabe es ist, einen Brenngasinjektor anzugeben, zur Ausbildung einer im Allgemeinen flachen, fächer- oder flächenartigen Flammenkonfiguration. Die Flammenkonfiguration soll zum einen über eine gewisse Erstreckung in die Glasschmelzwanne hinein ihre im Allgemeinen flache, fächerartige Konfiguration beibehalten. Die Flammenkonfiguration soll insbesondere ausreichend stabil sein, das heißt anders ausgedrückt, die Flamme soll über einen ausreichenden Flächenbedeckungsgrad auch flach und in fächerartiger Konfiguration erhalten bleiben, ohne auseinanderzufallen oder abzurunden. Vorteilhaft soll die Flamme mit der im Allgemeinen flachen, fächerartigen Konfiguration außer dem vorteilhaften Flächenbedeckungsgrad damit auch ein vorteilhaftes Geschwindigkeitsprofil aufweisen.

Insbesondere ist es eine weitere Aufgabe der Erfindung, die Flamme in der flachen, insbesondere fächerartigen Konfiguration nicht nur soweit wie möglich und stabil über die Glasschmelzwanne zu bringen, sondern darüber hinaus soll in etwa auch am Flammenerzeugungspunkt --das heißt an der Mündung des Brenngasinjektors nach oder bei einem Freistrahlbereich-- das keramische Wandungsmaterial des Industrieofens geschützt sein, insbesondere soll ein direkter Flammenkontakt mit dem keramischen Material der Injektoreinsatzöffnung, wie dies im Stand der Technik der Fall ist, vermieden werden.

Insbesondere soll der Brenngasinjektor für eine derart gestaltbare, im Allgemeinen flache, fächer- oder flächenartige Flammenkonfiguration so in einem keramischen Wandungselement bzw. keramischen Material der Injektoreinsatzöffnung anbringbar sein, dass die flache, im Wesentlichen flache, fächerartige Flammenkonfiguration, das keramische Wandungsmaterial nicht beschädigt zum anderen aber der Brenngasinjektor vor Überhitzung geschützt ist und in verbesserter Weise kühlbar ist.

Hinsichtlich der Flammenbildung soll der Ausbrand des Brennmaterials, das heißt der Ausbrand der Flamme, verbessert sein und die NOx- oder sonstige CO- oder Schadstoffproduktion herabgesetzt sein. Insbesondere ist die Reichweite der Flamme, das heißt mit ihrem Geschwindigkeitsprofil, so einstellbar sein, dass der Ausbrand oberhalb der Glaswanne optimiert ist. Insbesondere ist vorteilhaft zu vermeiden, dass unverbrannter Brennstoff in einen gegenüberliegenden Regenerator oder Rekuperator des Industrieofens gelangt. Andererseits aber soll die Reichweite der Flamme ausreichend sein; keinesfalls sollte diese zu kurz sein, um das keramische Wandungsmaterial zu schonen.

Es zeigt sich, dass vor allem auch bislang bekannte ausdrücklich als Brenner (also Sauerstoff und Brenngas gleichzeitig zuführende) gestaltete Konfigurationen zur Lösung einer solchen Aufgabe nicht geeignet sind. Bei einem ausdrücklich als Injektor gestalteten Brenngasinjektor (also nur Brenngas führend) wie er vorliegend Gegenstand der Aufgabe der Erfindung ist, wird ein Brenngas allein geführt; insbesondere fehlt eine Sauerstoffkomponente zur Umsetzung des Brenngases mit ihrer die Flamme gestaltenden Dynamik wie dies bei Brennern der Fall ist.

Die Aufgabe wird hinsichtlich des Brenngasinjektors gelöst durch einen Brenngasinjektor mit den Merkmalen des Anspruchs 1.

Anspruch 16 gibt ein erfindungsgemäßes System an, mit einem keramischen Wandungselement eines regenerativ oder rekuperativ beheizten Industrieofens mit einer keramischen Injektoreinsatzöffnung, ausgebildet zum Einsatz des Brenngasinjektors und dem Brenngasinjektor, bzw. und dem eingesetzten Brenngasinjektor gemäß der Erfindung.

Die Erfindung führt auch auf, einen regenerativ oder rekuperativ beheizten Industrieofen mit einer Anzahl von Systemen der vorgenannten Art, jeweils eines keramischen Wandungselements und dem insbesondere eingesetzten Brenngasinjektor in jeweils wenigstens einer keramischen Injektoreinsatzöffnung, jeweils zum Einsatz des Brenngasinjektors gemäß der Erfindung.

Zur Lösung der Aufgabe geht die Erfindung aus von einem Brenngasinjektor zur Befeuerung eines regenerativ oder rekuperativ beheizten Industrieofens mit einem Gaszuführungsrohr und einer Mündung, wobei deren Verbindung mit einem Langdiffusor mit einem Freistrahlöffnungswinkel gebildet ist, wobei der Langdiffusor ein die Mündung ausbildendes und metallisches, kühlbares Diffusorrohr aufweist, das dazu vorgesehen ist, zu der keramischen Injektoreinsatzöffnung einen Abschluss an der Mündung des Brenngasinjektors zu bilden.

Erfindungsgemäß ist ein Brenngasinjektor wie in Anspruch 1 definiert, vorgesehen. Weiterbildungen der Erfindung sind in den abhängigen Ansprüchen angegeben.

Zur Lösung der Aufgabe führt die Erfindung auch auf ein System des Anspruchs 16.

Zur Lösung der Aufgabe führt die Erfindung auch auf einen regenerativ oder rekuperativ beheizten Industrieofen mit einer Anzahl von erfindungsgemäßen Systemen jeweils eines keramischen Wandungselements und jeweils einem eingesetzten erfindungsgemäßen Brenngasinjektor in jeweils wenigstens eine keramischen Injektoreinsatzöffnung des Wandungselements, obgleich dies nicht Gegenstand der Ansprüche ist.

Erfindungsgemäß ist zur Erreichung einer verbesserten Flächenbedeckung, der als Flach-Langdiffusor ausgebildete Langdiffusor mit einem Diffusorausgangs-Flachrohr und einem Diffusoreingangs-Flachrohr gebildet.

Das Verhältnis eines offenen Quererstreckungsmaßes zu einem offenen Hocherstreckungsmaß liegt erfindungsgemäß im Bereich zwischen 5 und 30, insbesondere zwischen 7 und 25.

Vorteilhaft liegt wenigstens an der Grenze zwischen dem Diffusorausgangs-Flachrohr und dem Diffusoreingangs-Flachrohr, insbesondere in einem Teilbereich oder dem gesamten Bereich des Diffusoreingangs-Flachrohres, die Quererstreckung und die Hocherstreckung vor. Vorteilhaft kann für eine Flammenstabilität ein Verhältnis einer Quererstreckung zur horizontalen Ausrichtung und einer Hocherstreckung zur vertikalen Ausrichtung im Diffusoreingangs-Flachrohr, insbesondere an der Grenze zwischen Diffusorausgangs-Flachrohr und Diffusoreingangs-Flachrohr, definiert werden. Das Diffusoreingangs-Flachrohr dient vorteilhaft als Vergleichmäßiger und die Flammgestaltung findet vor allem dort statt. Deswegen liegt das Verhältnis wenigstens an der Grenze vor und wird dort definiert zur Gestaltung der Flamme, insbesondere in einem Teilbereich oder dem gesamten Bereich des Diffusoreingangs-Flachrohres, vorzugsweise bis zu einer Grenze zu einem Anschluss-Flachrohr.

Bei einer solchen Gestaltung eines Querschnitts, insbesondere wenigstens an der Grenze zwischen Diffusoreingangs-Flachrohr und Diffusorausgangs-Flachrohr, des Flach-Langdiffusors, hat die Erfindung die Erkenntnis zugrunde gelegt, dass das Verhältnis eines offenen Quererstreckungsmaßes zu einem offenen Hocherstreckungsmaß zudem in einem Bereich zwischen 5 und 30, insbesondere zwischen 7 und 25, liegt, wenn die Flamme mit im Wesentlichen flacher, flächenartiger Konfiguration stabil sein soll und eine ausreichende Reichweite in die Glaswanne und einen verbesserten Ausbrand haben soll. Vorzugsweise ist die Quererstreckung des Flach-Langdiffusors zur horizontalen Ausrichtung und die Hocherstreckung des Flach-Langdiffusors zur vertikalen Ausrichtung im Industrieofen vorgesehen.

Vorteilhaft ist, dass ein Diffusoreingangs-Flachrohr als Vergleichmäßigungsstrecke im Flach-Langdiffusor der Flammenstabilität zuträglich ist, wenn der Flach-Langdiffusor mit einem Freistrahlöffnungswinkel sich zwischen Gaszuführungsrohr und Mündung erstreckt. Vorteilhaft liegt auch beim Diffusorausgangs-Flachrohr, insbesondere in dem gesamten Bereich des Diffusorausgangs-Flachrohres, eine andere Quererstreckung und eine andere Hocherstreckung vor, wobei sich diese auf Grund des Freistrahlwinkels entlang der Erstreckung zur Mündung hin ständig ändern.

Die Erfindung hat erkannt, dass bei Verhältnissen unterhalb von 5 die Flamme mit flacher und fächerartiger Konfiguration eher entweder zu rund ist, oder im weiteren Verlauf abrundet; also im Endeffekt mit zu geringer Reichweite und ggfs. zu wenig Flächenbedeckung ausgebildet wird. Trotzdem liegt das Verhältnis in der Tendenz bei eher kleineren Werten, insbesondere zwischen 7 und 25. Für ein Verhältnis oberhalb von 30 hat die Erfindung erkannt, dass die Flamme mit flacher bzw. flächenartiger Konfiguration zu instabil werden kann und insbesondere in einzelne Flammgebiete zerfallen kann. Hier kann kaum eine Flächenbedeckung oder ein Ausbrand optimiert werden, da die Flamme zu instabil ist.

Des Weiteren ist von der Erfindung erkannt worden, dass zum Abschluss der keramischen Injektoreinsatzöffnung an der Mündung ein Abschluss an der Mündung vorteilhaft ist; d. h. eine Ebene der Mündung liegt in einer Ebene der Ofenwandung und in einer Ebene der Mündung des Flach-Langdiffusors. Das Diffusorrohr ist erfindungsgemäß dazu vorgesehen, zu der keramischen Injektoreinsatzöffnung einen Abschluss an der Mündung des Brenngasinjektors zu bilden, der vorzugsweise kontaktfrei ist; d. h. insbesondere am Rand kontaktfrei ist.

Weiterhing ist das Diffusorausgangs-Flachrohr des Flach-Langdiffusors erfindungsgemäß von einem von flüssigem Kühlmittel durchströmbaren, Kühlmantel umfasst, der dazu vorgesehen ist, ebenfalls einen Abschluss zu der keramischen Injektoreinsatzöffnung an der Mündung des Brenngasinjektors zu bilden. Der Abschluss ist vorzugsweise kontaktfrei.

Erfindungsgemäß ist also vorgesehen, dass der Langdiffusor ein die Mündung ausbildendes und metallisches, kühlbares Diffusorrohr aufweist, das dazu vorgesehen ist, zu der keramischen Injektoreinsatzöffnung einen vorzugsweise kontaktfreien Abschluss an der Mündung des Brenngasinjektors zu bilden. Anders ausgedrückt, der Brenngasinjektor kann mit seiner Mündung bündig mit der Auslassöffnung der Injektoreinsatzöffnung ausgeführt sein.

Einsatzwinkel und Stellung des Brenngasinjektors in der Injektoreinsatzöffnung lassen sich durch einen geeigneten Spielraum infolge des vorteilhaft kontaktfreien Abschlusses an der Mündung einrichten; das heißt ein vorzugsweise geringer Spalt zwischen Außenrand der Mündung des Brenngasinjektors und Innenrand der Injektoreinsatzöffnung eignet sich zur Justage des Brenngasinjektors. Auch dadurch wird die Flächenbedeckung, die Freistrahlcharakteristik und die Reichweite der stabilen Injektorflamme bevorzugt einstellbar erreicht.

Insgesamt hat die Erfindung damit bei hohem Flächenbedeckungsgrad Vorteile gegenüber dem Stand der Technik infolge besseren Ausbrands, geringer NOx/CO-Produktion und vor allem einer optimierbaren Reichweite und Flächenbedeckung der flachen insgesamt flächenartigen Flammenkonfiguration. Die Abstände der Brenngasinjektoren mit Langflachdiffusoren lassen sich je nach Bedarf in der Glaswanne einrichten.

Eine Luftzufuhr als Verbrennungsluft kann über einen oder mehrere separate Kanäle erfolgen. Der oder die Kanäle können vorzugsweise in der Nähe der Injektoreinsatzöffnung, insbesondere über und/oder unter der Injektoreinsatzöffnung, ggfs. auch neben der Injektoreinsatzöffnung, für den Brenngasinjektor in den Ofenraum mit z. B. einer Glaswanne, münden. Die Anordnung ist derart, dass eine Flamme mit im Wesentlichen flächenartiger Flammenkonfiguration ausgebildet wird.

Insgesamt wird durch einen flachen Brenngasinjektor der erfindungsgemäßen Art mit dem genannten Flach-Langdiffusor ein überraschend hoher Energiefluss in die Glasschmelze bei einem Industrieofen erreicht, das heißt eine Verbesserung des Energieflusses im Bereich von 1 bis wenigstens 5 %.

Erfindungsgemäß ist weiter vorgesehen, dass wenigstens das Diffusorausgangs-Flachrohr des Flachlangdiffusors entlang seiner gesamten axialen Erstreckung zwischen der Mündung und der Grenze zum Diffusoreingangs-Flachrohr von einem, insbesondere wasserkühlbaren, Kühlmantel umfasst ist, der ebenfalls dazu vorgesehen ist, einen vorzugweise kontaktfreien Abschluss zu der keramischen Injektoreinsatzöffnung an der Mündung des Brenngasinjektors zu bilden. Vorteilhaft ist der Kühlmantel von einem flüssigen Kühlmittel durchströmbar, wobei das Kühlmittel insbesondere Wasser ist, d. h. der Kühlmantel wasserkühlbar ist.

Der erfindungsgemäß vorgesehene Kühlmantel schützt einerseits mit Vorteil versehen das keramische Material des keramischen Wandungselements auf der Innenseite der keramischen Injektoreinsatzöffnung und zum anderen reicht der Flammenquellpunkt direkt bis an die Mündung und die Flamme kann sich direkt in die Glaswanne erstrecken. Fehler wie Flammenrückschläge oder dergleichen sind vermieden durch den vorzugsweise kontaktfreien Abschluss an der Mündung des Brenngasinjektors. Das keramische Material der Injektoreinsatzöffnung ist außerdem durch den Kühlmantel geschützt und gleichzeitig ist der Brenngasinjektor nicht nur im Mündungsbereich an der Mündung gekühlt, sondern entlang seiner gesamten axialen Erstreckung zwischen der Mündung und der Grenze zum Diffusoreingangs-Flachrohr.

Knapp gesagt sieht die Erfindung wesentlich vor, dass praktisch der gesamte Bereich der Freistrahlbildung gekühlt ist. Auch dies ist der Flammenbildung und vor allem auch dem Schutz des keramischen Wandungsmaterials zuträglich.

Insgesamt lassen sich damit die synergetisch wirkenden erfindungswesentlichen Merkmale wie folgt zusammenfassen. Das Diffusoreingangs-Flachrohr ermöglicht eine für den hier im Folgenden als Flachstrahl bezeichnete im Allgemeinen flache, fächer- und/oder flächenartige Flammenkonfiguration; vorzugsweise gebildet im Bereich einer Vergleichmä-ßigungsstrecke. Dies vorteilhaft so, dass die Flammenformung im Diffusorausgangs-Flachrohr, insbesondere mit an der Grenze zwischen Diffusoreingangs-Flachrohr und Diffusorausgangs-Flachrohr festgelegtem, Verhältnis eines offenen Quererstreckungsmaß und offenen Hocherstreckungsmaß erfolgen kann.

Das Verhältnis liegt erfindungsgemäß zwischen 5 und 30 für eine bevorzugt ausgebildete Flamme und gleichwohl stabile, mit nötiger Flächenbedeckung und Tiefenerstreckung bzw. Reichweite einer Flachstrahlflamme. Zudem ist wenigstens das Diffusorausgangs-Flachrohr des Flach-Langdiffusors, vorteilhaft der gesamte Flach-Langdiffusor, das heißt das Diffusorausgangs-Flachrohr und praktisch das gesamte Diffusoreingangs-Flachrohr gekühlt. Erfindungswesentlich ist das Diffusorausgangs-Flachrohr des Flach-Langdiffusors entlang seiner gesamten axialen Erstreckung zwischen der Mündung und der Grenze zum Diffusoreingangs-Flachrohr von einem Kühlmantel umfasst. Sowohl die Mündung als auch der Kühlmantel sind dazu vorgesehen, einen Abschluss zu der keramischen Injektoreinsatzöffnung an der Mündung des Brenngasinjektors zu bilden.

Hinsichtlich des Systems eines keramischen Wandungselements eines regenerativ oder rekuperativ beheizten Industrieofens mit einer keramischen Injektoreinsatzöffnung und dem Brenngasinjektor bzw. hinsichtlich des regenerativ oder rekuperativ beheizten Industrieofens ergeben sich weitere Vorteile. So ist die Anordnung von Brenngasinjektoren letztendlich mit weiterem Abstand zwischen den Injektoren und einer geringeren Zahl derselben auskommt; nämlich aufgrund der vorteilhaft höheren Flächenbedeckung und Reichweite der Flachstrahlflamme. Das mit Kühlmantel gebildete Einfassungssystem der mit der Innenwand des keramischen Wandungsmaterials führt dazu, dass die Mündung des Flach-Langdiffusors bündig mit dieser Wandung ist; die Flamme also direkt an der Mündung gebildet und also im Ofenraum vollständig zur Verfügung steht.

Vorteilhafte Weiterbildungen der Erfindung sind den Unteransprüchen zu entnehmen und geben im einzelnen vorteilhafte Möglichkeiten an, die oben erläuterte Erfindung im Rahmen der Aufgabenstellung sowie hinsichtlich weiterer Vorteile zu realisieren.

Vorteilhaft ist vorgesehen, dass das Diffusorausgangs-Flachrohr im Bereich der Mündung ebenfalls eine Quererstreckung und eine Hocherstreckung aufweist, wobei die Quererstreckung zur horizontalen Ausrichtung und die Hocherstreckung zur vertikalen Ausrichtung im Industrieofen vorgesehen ist, wobei
- an der Mündung ein zweites Verhältnis eines offenen Quererstreckungsmaßes zu einem offenen Hocherstreckungsmaß kleiner ist als das erste Verhältnis des offenen Quererstreckungsmaßes zu dem offenen Hocherstreckungsmaß an der Grenze zwischen dem Diffusorausgangs-Flachrohr und dem Diffusoreingangs-Flachrohr, insbesondere das zweite Verhältnis in einem Bereich zwischen 5 und 20 liegt. Dieses zweite Verhältnis liegt vorteilhaft unter dem ersten Verhältnis, da sich der Flach-Langdiffusor mit dem Freistrahlöffnungswinkel vorteilhaft in der Hocherstreckung öffnet; das Hocherstreckungsmaß als stärker zunimmt zur Mündung hin als das Quererstreckungsmaß - somit liegt das zweite Verhältnis vorteilhaft unter dem ersten Verhältnis.
   Vorteilhaft ist vorgesehen, dass der Flach-Langdiffusor zusätzlich zu dem Diffusorrohr mit dem Diffusorausgangs-Flachrohr und dem Diffusoreingangs-Flachrohr ein, insbesondere metallisches, Anschluss-Flachrohr aufweist, das --gegen die Strömungsrichtung gesehen-
- an das Diffusorrohr, nämlich das Diffusoreingangs-Flachrohr, angeschlossen ist und sich in axialer Richtung erstreckt. Diese Weiterbildung einer gänzlich axialen Anordnung ist vergleichsweise turbulenz- und strömungswiderstandsarm.

Vorteilhaft kann zusätzlich oder alternativ vorgesehen sein, dass der Flach-Langdiffusor zusätzlich zu dem Diffusorrohr mit dem Diffusorausgangs-Flachrohr und dem Diffusoreingangs-Flachrohr einen, insbesondere metallischen, Verteilerraum aufweist, der --gegen die Strömungsrichtung gesehen-- an das Diffusorrohr, nämlich das Diffusoreingangs-Flachrohr, angeschlossen ist, insbesondere z. B. in Form eines Krümmers gekrümmt ist und/oder sich quer zur axialen Richtung erstreckt. Der Verteilerraum ist einer vorteilhaften Durchmischung von ggfs. mehreren Brenngasen zuträglich und zudem Bauraumsparend.

Vorteilhaft ist vorgesehen, dass sich ein erster Freistrahlöffnungswinkel in der Hocherstreckung im Bereich von 0° bis 25°, insbesondere 10° bis 25°, vorzugsweise um 15° bis 20°, insbesondere um etwa 15°, befindet.

Vorteilhaft liegt ein zweiter Freistrahlöffnungswinkel in der Quererstreckung im Bereich von 0° bis 15°, insbesondere um etwa 0° bis 5°, befindet. Bevorzugt hat wenigstens einer der Freistrahlwinkel einen endlichen Wert; es liegen also nicht beide gleichzeitig bei 0°; d. h. der Flach-Langdiffusor öffnet sich in wenigstens einer der Hocherstreckung und der Quererstreckung.

Vorteilhaft ist vorgesehen, dass
- ein Anschluss-Flachrohr des Flach-Langdiffusors sich von einem runden Querschnitt des Gaszuführungsrohres zu einem relativ dazu abgeflachten Querschnitt an der Grenze zum Diffusoreingangs-Flachrohr verflacht, insbesondere das Anschluss-Flachrohr einen Gaszuführungsrohr seitigen runden Querschnitt und einen Diffusoreingangs-Flachrohr seitigen relativ dazu abgeflachten Querschnitt aufweist, wobei sich das Anschluss-Flachrohr in der Hocherstreckung von dem runden auf den abgeflachten Querschnitt verjüngt und in der Quererstreckung von dem runden auf den abgeflachten Querschnitt verbreitert. Dies ist baulich und strömungstechnisch von Vorteil - zudem liegt dann bereits am Ausgang des Anschluss-Flachrohres bzw. an dessen Grenze zum Diffusoreingangs-Flachrohr das erste Verhältnis eines offenen Quererstreckungsmaßes zu einem offenen Hocherstreckungsmaß in einem Bereich zwischen 5 und 30, insbesondere zwischen 7 und 25 vor.

Vorteilhaft ist vorgesehen, dass
- das Anschluss-Flachrohr an der Grenze zum Diffusoreingangs-Flachrohr, einen Öffnungswinkel in der Quererstreckung im Bereich von 10° bis 60° aufweist und/oder
- an der Grenze zum Diffusoreingangs-Flachrohr ebenso wie das Diffusoreingangs-Flachrohr das erste Verhältnis des offenen Quererstreckungsmaßes zu dem offenen Hocherstreckungsmaß in einem Bereich zwischen 5 und 30 aufweist. Das Anschlussflachrohr adaptiert dann in vorteilhafter Weise von einem runden Querschnitt des Gaszuführungsrohres auf den Querschnitt des als Vergleichmäßigungsabschnitt dienenden Querschnitt des Anschluss-Flachrohres.

Vorteilhaft ist vorgesehen, dass das Anschluss-Flachrohr frei von einem Kühlmantel ist; d. h. weitgehend und relativ ungekühlt ist. im Vergleich zum Diffusorausgangs-Flachrohr und/oder zum Diffusoreingangs-Flachrohr des Flach-Langdiffusors. Dies führt zu einer vergleichsweise einfachen Bauweise. Vorteilhaft ist vorgesehen, dass das Diffusoreingangs-Flachrohr des Flach-Langdiffusors praktisch entlang seiner gesamten axialen Erstreckung zwischen der Grenze zwischen dem Diffusorausgangs-Flachrohr und dem Diffusoreingangs-Flachrohr und der Grenze zwischen dem Diffusoreingangs-Flachrohr und dem Anschluss-Flachrohr ebenfalls einen bzw. den, insbesondere wasserkühlbaren, Kühlmantel umfasst ist. Dies führt bereits in der Vergleichmäßigungsstrecke zu einer vorteilhaften Kühlung und guten Strömung des Brenngases.

Vorteilhaft ist vorgesehen, dass das Diffusoreingangs-Flachrohr vollständig parallel geführte Rohrwandungen in der Quererstreckung und in der Hocherstreckung aufweist. Vorteilhaft ist vorgesehen, dass sich der, insbesondere der erste und/oder zweite, Freistrahlöffnungswinkel sich nur in der Hocherstreckung öffnet wobei in der Quererstreckung eine Rohrwandung des Flach-Langdiffusors, insbesondere Diffusorausgangs-Flachrohres, parallel geführt ist.

Vorteilhaft ist vorgesehen, dass der wasserkühlbare Kühlmantel zweimantelig ausgebildet ist, wobei ein innerer wasserkühlbarer Zulauf-Kühlmantel und ein äußerer wasserkühlbarer Ablauf-Kühlmantel Kühlmittel austauschbar in Verbindung stehen, insbesondere über radiale Ringöffnungen Kühlmittel austauschbar in Verbindung stehen. Vorteilhaft ist vorgesehen, dass der Kühlmantel sich in der Hocherstreckung derart verjüngt, dass in der Hocherstreckung der sich öffnende Freistrahlöffnungswinkel derart kompensiert wird, dass eine Außenabmessung des Diffusorausgangs-Flachrohres sich zur Mündung verjüngt oder parallel geführt ist. Vorteilhaft ist vorgesehen, dass eine Außenabmessung des Diffusoreingangs-Flachrohres zur Mündung parallel geführt ist und sich eine Außenabmessung des Diffusorausgangs-Flachrohres verjüngt.

Vorteilhaft ist vorgesehen, dass das Gaszuführungsrohr und der Flach-Langdiffusor aneinander geformt sind, insbesondere das Anschluss-Flachrohr und das Gaszuführungsrohr über ein Adapterstück aneinander geformt sind. Vorteilhaft ist vorgesehen, dass das Anschluss-Flachrohr an das Diffusoreingangs-Flachrohr angeflanscht ist.

Vorteilhaft ist vorgesehen, dass das Gaszuführungsrohr und/oder das Anschluss-Flachrohr zur einstellenden Drosselung und/oder Eindüsung einer Strömung einen innenliegenden Stellmechanismus und/oder ein Zentralzuführungsrohr aufweisen, insbesondere wobei ein mit dem Stellmechanismus zusammenwirkender Drosselkörper und/oder eine Zentralmündung des Zentralzuführungsrohres im bzw. bis zum Bereich des Anschluss-Flachrohres und/oder das Diffusoreingangs-Flachrohres angeordnet sind.

So ist es möglich, dass das Gaszuführungsrohr und/oder das Anschluss-Flachrohr Leitungsführungen aufweisen, derart, dass sich in axialer Strömungsrichtung im Flach-Langdiffusor, eine periphere Hauptströmung und/oder eine mittige Zentralströmung ausbilden, insbesondere eine mittige Zentralströmung mit einem einstellbaren Massenvolumen in der mittigen Zentralströmung ausbilden.

Diese Maßnahmen können derart vorgenommen bzw. eingestellt werden, das
- eine Strömungsgeschwindigkeit in der peripheren Hauptströmung im Verhältnis zu einer Strömungsgeschwindigkeit in der mittigen Zentralströmung zwischen 0.5 bis 1.5 beträgt. Vorzugsweise liegt das Verhältnis zwischen 0.9 und 1.1 , insbesondere im Bereich von 1 liegt, wenn das Massenvolumen in der mittigen Zentralströmung bei 30 % des Massenvolumens in der peripheren Hauptströmung liegt.

Vorteilhaft ist vorgesehen, dass
- an der Grenze zwischen dem Diffusorausgangs-Flachrohr und dem Diffusoreingangs-Flachrohr das erste Verhältnis des offenen Quererstreckungsmaßes zu dem offenen Hocherstreckungsmaß derart ausgebildet ist, dass eine Gasgeschwindigkeit im Diffusoreingangs-Flachrohr zwischen 30 m/s und 150 m/s beträgt, und/oder
- an der Mündung ein zweites Verhältnis eines offenen Quererstreckungsmaßes zu einem offenen Hocherstreckungsmaß derart ausgebildet ist, dass eine Gasgeschwindigkeit im Diffusorausgangs-Flachrohr, insbesondere an der Mündung zwischen 20 m/s und 60 m/s, insbesondere zwischen 20 m/s und 30 m/s beträgt.

Vorteilhaft hat sich bei der Flammenbildung mit einem Langdiffusor herausgestellt, dass sich gemäß der Erfindung ein Geschwindigkeitsprofil einer solchen Flamme beim Verlassen des Diffusoreingangs-Flachrohres mit einer Gasgeschwindigkeit im Bereich zwischen 30 m/s bis 150 m/s, vorzugsweise 40 m/s bis 100 m/s einstellen lässt. Die Reichweite einer solchen, dann stabil ausgebildeten und flachen Flamme mit in etwa fächerartiger bis flächenartiger Konfiguration liegt bei 10m bis 15m, bevorzugt um die 12m in die Glaswanne hinein. Vorzugsweise liegt dazu ein kleinster Durchmesser des Gaszuführungsrohres bei 100 mm, ggf. bis hinunter zu 80 oder 40 mm.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein.

Die Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:

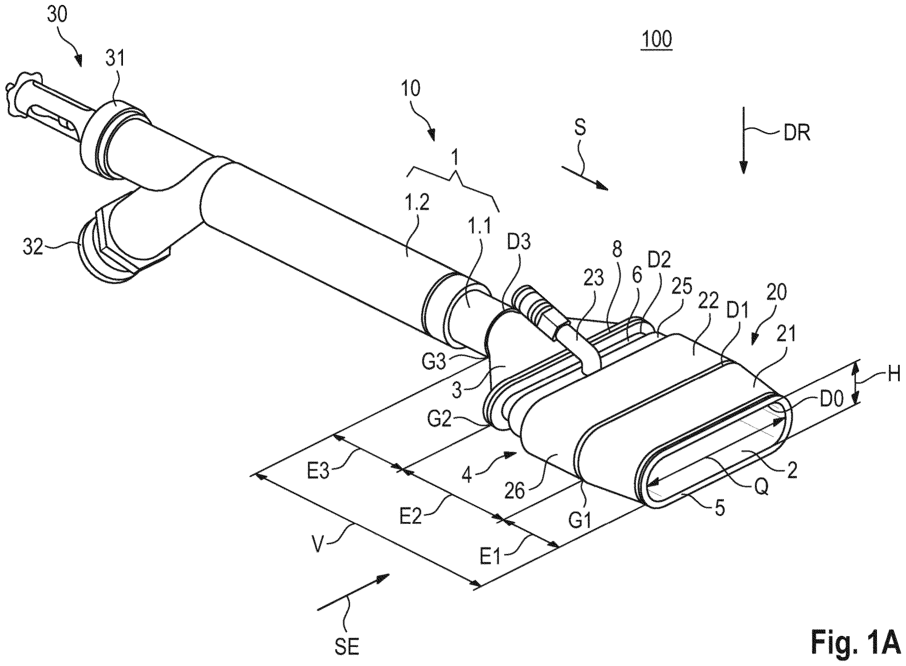

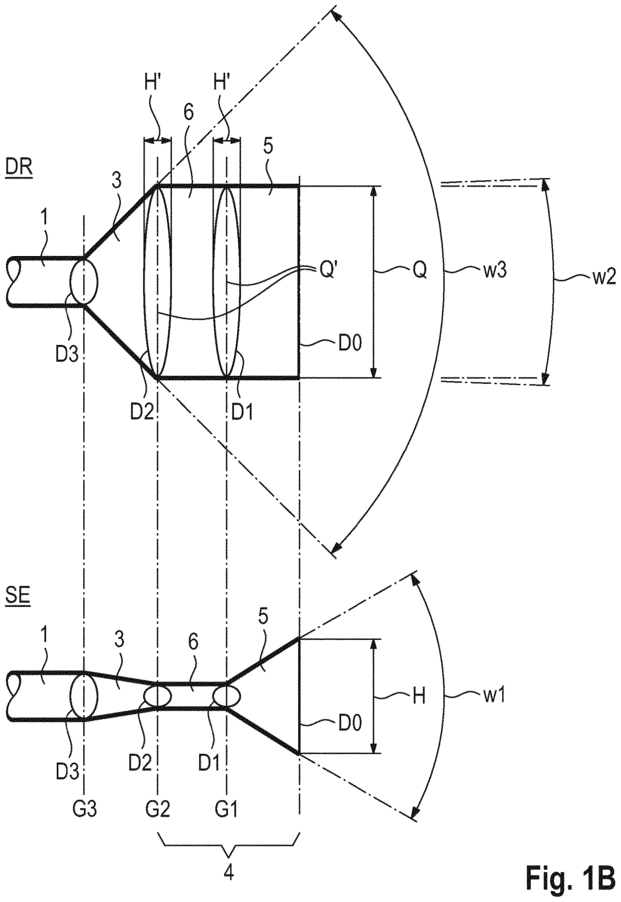

- FIG. 1: eine perspektivische Darstellung des Brenngasinjektors (FIG. 1A) und eine schematische Darstellung des Langflachdiffusors in Quererstreckung und Hocherstreckung (FIG. 1B) zur Veranschaulichung der Freistrahlöffnungswinkel in Hocherstreckung und gegebenenfalls Quererstreckung in Bezug auf das Diffusorausgangs-Flachrohr sowie unter Darstellung des Diffusoreingangs-Flachrohres und dem Gaszuführungsrohr bzw. einem dazwischenliegenden Anschluss;

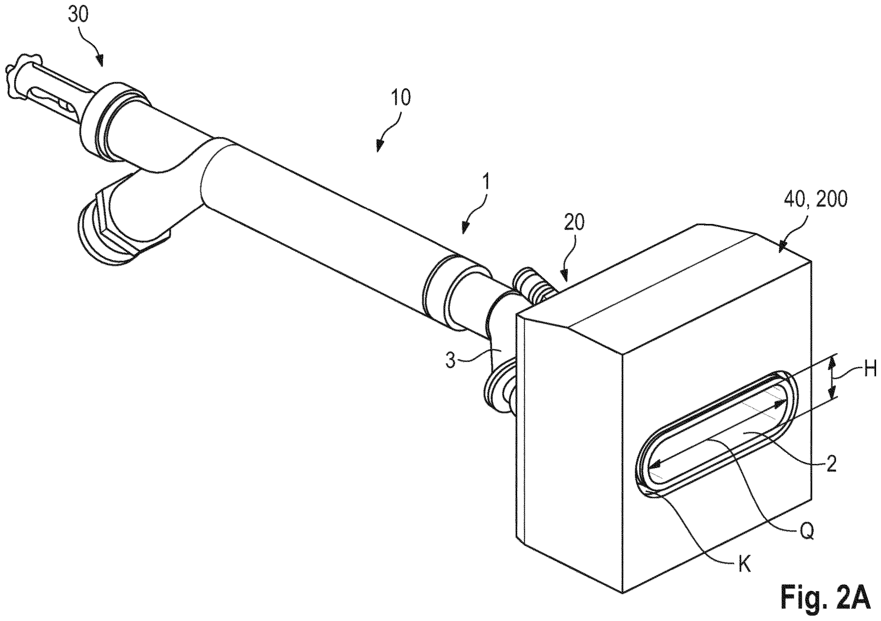

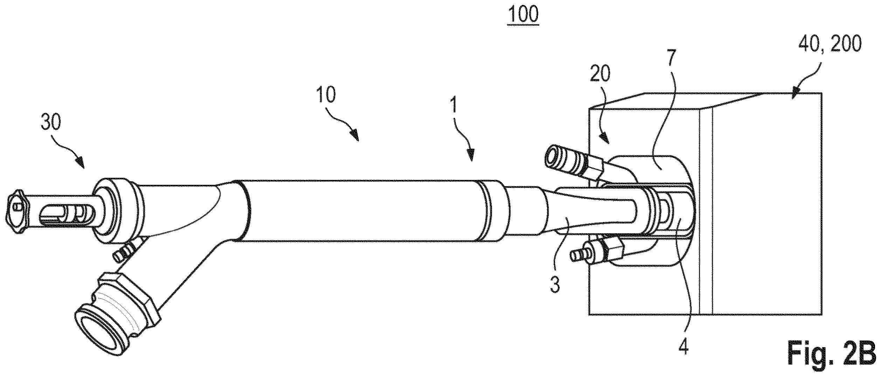

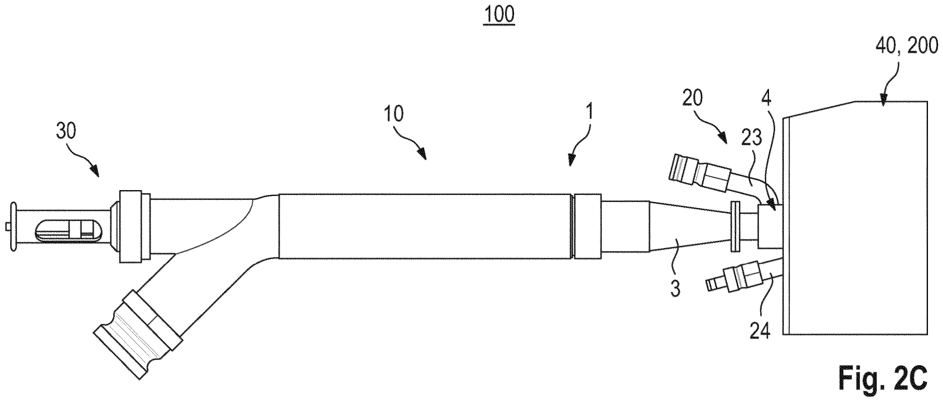

- FIG. 2: eine ebenfalls perspektivische Ansicht des Brenngasinjektors als Teil des Systems aus keramischem Wandungselement eines regenerativ oder rekuperativ beheizten Industrieofens und dem Brenngasinjektor (FIG. 2A); eine perspektivische Ansicht von hinten unter Darstellung der keramischen Injektoreinsatzöffnung (FIG. 2B) und eine Seitenansicht des Systems (FIG. 2C);

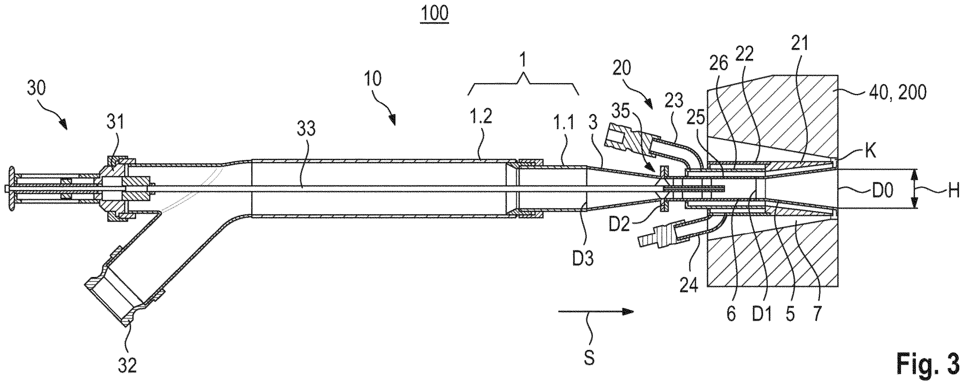

- FIG. 3: eine vergrößerte Seitenschnittansicht des Systems eines keramischen Wandungselements eines regenerativ oder rekuperativ beheizten Industrieofens mit einer keramischen Injektoreinsatzöffnung, ausgebildet zum Einsatz eines Brenngasinjektors;

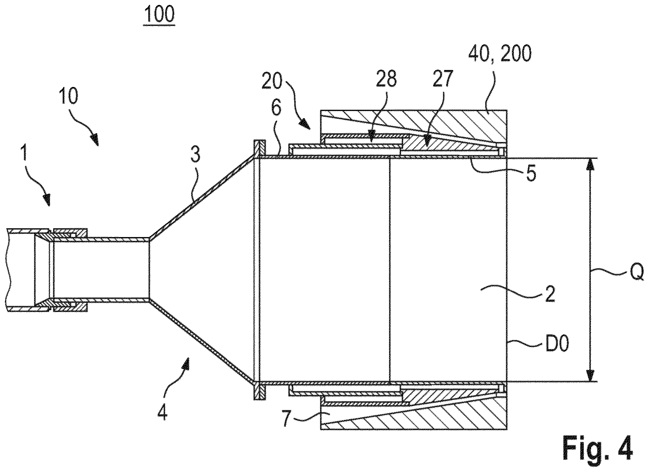

- FIG. 4: die Ausführungsform unter Detaildarstellung des Flach-Langdiffusors in der Injektoreinsatzöffnung eines keramischen Wandungselements unter Schnittdarstellung des Kühlmantels mit einer Ausführungsform eines Kühlmantels;

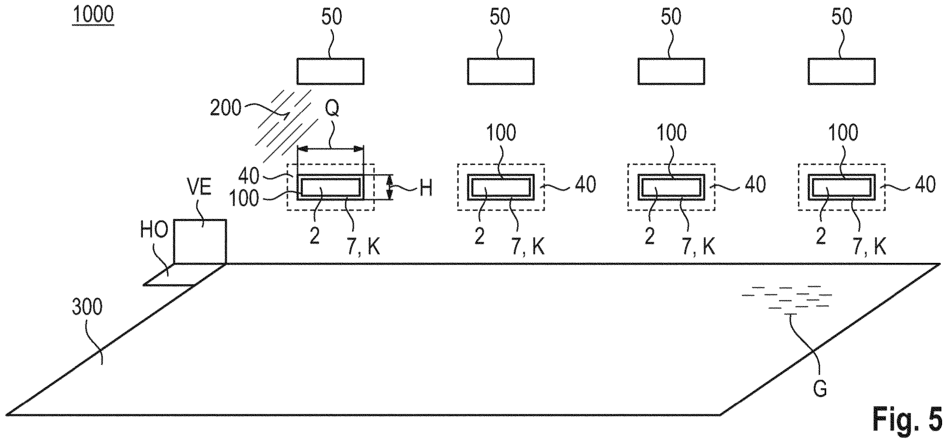

- FIG. 5: in schematischer Darstellung, einen regenerativ oder rekuperativ beheizten Industrieofen mit einer Anzahl von Systemen jeweils eines keramischen Wandlungselements einer keramischen Wandung des Industrieofens und einem dort jeweils eingesetzten Brenngasinjektor in jeweils einer keramischen Injektoreinsatzöffnung des keramischen Wandungselements.

FIG. 1 zeigt in FIG. 1A perspektivisch für eine besonders bevorzugte Ausführungsform einen Brenngasinjektor 100 zur Befeuerung eines in FIG. 5 jedenfalls schematisch dargestellten Industrieofens 1000. Der Brenngasinjektor 100 weist dazu ein Gaszuführungsrohr 1 und eine Mündung 2 auf, wobei deren Verbindung V mit einem Langdiffusor gebildet ist, der vorliegend gemäß der Erfindung als ein Flach-Langdiffusor 4 ausgebildet ist. Dabei ist ein Diffusorrohr mit einem Diffusorausgangs-Flachrohr 5 und einem Diffusoreingangs-Flachrohr 6 gebildet, deren Ausführung als Flachrohr im Weiteren noch im Einzelnen erläutert wird.

Bereits hier bezugnehmend auf FIG. 5 ist dazu eine Anzahl von nebeneinander angeordneten Systemen gezeigt; jedes System umfasst ein keramisches Wandungselement 40 in einer Wandung 200 des regenerativ oder rekuperativ beheizten Industrieofens 1000 mit einer keramischen Injektoreinsatzöffnung 7, ausgebildet zum Einsatz eines Brenngasinjektors 100; d. h. hier mit einem eingesetzten Brenngasinjektor 100 oberhalb einer Glasoberfläche 300 von geschmolzenem Glas G. Eine Quererstreckung Q des Flach-Langdiffusors 4 ist zur horizontalen Ausrichtung HO und eine Hocherstreckung H des Flach-Langdiffusors 4 ist zur vertikalen Ausrichtung VE im Industrieofen 1000 vorgesehen.

Grundsätzlich sind beim Brenngasinjektor 100 das Gaszuführungsrohr 1 und der Flach-Langdiffusor 4 Teil einer Rohranordnung 10 wie dies in FIG. 1 ersichtlich ist. Ein kleinster Durchmesser des Gaszuführungsrohres liegt bei 100 mm, ggf. bis hinunter zu 80 oder 40 mm.

Der weitere ebenfalls in FIG. 1 ersichtliche grundsätzliche Aufbau des Brenngasinjektors 100 zeichnet sich durch eine Kühlanordnung 20 aus, die derart gebildet ist, dass der Flach-Langdiffusor 4 ein die Mündung 2 ausbildendes und metallisches kühlbares Diffusorrohr aufweist, das dazu vorgesehen ist, zu einer in FIG. 3 und FIG. 4 näher erläuterten keramischen Injektoreinsatzöffnung 7 einen vorzugsweise kontaktfreien Abschluss an der Mündung 2 des Brenngasinjektors 100 zu bilden; d. h. die Ebene einer Öffnung der Injektoreinsatzöffnung 7 zur Glaswanne liegt in einer Ebene der Mündung 2 des Diffusorausgangs-Flachrohres 5 des Brenngasinjektors 100.

Des Weiteren ist in FIG. 1A ist eine Dosieranordnung 30 erkennbar, die letztlich mit Dosiermitteln versehene Gasdosierungsanschlüsse 31, 32 umfasst, wobei die Dosiermittel weiter in FIG. 3 erläutert sind.

Vorliegend ist das metallische kühlbare Diffusorrohr wenigstens in Form des Diffusorausgangs-Flachrohres 5 des Flach-Langdiffusors 4 gebildet, wobei in der vorliegenden Ausführungsform der FIG. 1A auch außer dem Diffusorausgangs-Flachrohr 5 das Diffusoreingangs-Flachrohr 6 als ein metallisches kühlbares Diffusorrohr gebildet ist. Gemäß der Erfindung ist vorliegend damit nicht nur die Mündung 2 und deren unmittelbarer Mündungsbereich kühlbar, sondern die vorliegend in FIG. 1A gezeigte Ausführungsform sieht vor, dass wenigstens ein in FIG. 1B näher erläuterter Freistrahlbereich des Flach-Langdiffusors 4 --das heißt vorliegend außer dem Diffusorausgangs-Flachrohr 5 auch praktisch das gesamte Diffusoreingangs-Flachrohr 6-- gekühlt wird.

Dazu weist die Kühlanordnung 20 einen vorderen, vorliegend wasserkühlbaren Kühlmantel 21 auf, wobei das Diffusorausgangs-Flachrohr 5 des Flach-Langdiffusors 4 entlang seiner gesamten axialen Erstreckung E1 zwischen der Mündung 2 und der Grenze G1 zum Diffusoreingangs-Flachrohr 6 von diesem vorderen, wasserkühlbaren Kühlmantel 21 umfasst ist. Sowohl der vordere Kühlmantel 21 als auch das Diffusorausgangs-Flachrohr 5 sind dazu vorgesehen, einen vorzugsweise kontaktfreien Abschluss zu der erwähnten keramischen Injektoreinsatzöffnung 7 an der Mündung 2 des Brenngasinjektors 100 zu bilden; d. h. die Ebene einer Öffnung der Injektoreinsatzöffnung 7 zur Glaswanne liegt in einer Ebene der Mündung 2 des Diffusorausgangs-Flachrohres 5 des Brenngasinjektors 100 und am Außenrand des Kühlmantels 21 existiert ein Fig. 2A gezeigter Kontaktspalt K zur Innenwandung des keramischen Wandungselements 40.

Bei der vorliegenden Ausführungsform ist auch das Diffusoreingangs-Flachrohr 6 des Flach-Langdiffusors 4 praktisch entlang seiner gesamten axialen Erstreckung E2 zwischen der genannten Grenze G1 zum Diffusoreingangs-Flachrohr 5 und der Grenze G2 zu einem Anschluss-Flachrohr 3 von einem hier wasserkühlbaren hinteren Kühlmantel 22 umfasst.

Der vordere und hintere Kühlmantel 21, 22 sind Teil der Kühlanordnung 20. Die Kühlanordnung 20 umfasst weiter einen inneren wasserkühlbaren Zulauf-Kühlmantel 25 mit Kühlmittelzulauf 23 mit Zulaufanschluss und einen äußeren wasserkühlbaren Ablauf-Kühlmantel 26 mit einem Kühlmittelrücklauf 24 mit Rücklaufanschluss, die noch besser in FIG. 3 zu erkennen sind, zusammen mit der Injektoreinsatzöffnung 7. Der vordere und hintere Kühlmantel 21, 22 ist insbesondere unter Berücksichtigung des inneren Zulauf-Kühlmantels 25 und äußeren Ablauf-Kühlmantels 26 zweimantelig ausgeführt, was noch in Bezug auf FIG. 3 und FIG. 4 erläutert ist.

Die vorgenannte Grenze G1 macht den vorderen und hinteren Kühlmantel 21, 22 in FIG. 1A erkennbar. An der Grenze G2 ist das Diffusoreingangs-Flachrohr 6 über einen Flanschanschluss 8 an das zuvor erwähnte Anschluss-Flachrohr 3 angeschlossen. Das Anschluss-Flachrohr 3 setzt sich wiederum ab einer Grenze G3 an ein inneres Gaszuführungsrohr 1.1 fort. Das innere Gaszuführungsrohr 1.1 ist in einem äußeren Gaszuführungsrohr 1.2 gehalten, was in Bezug auf FIG. 3 noch näher erläutert wird.

Der vordere und hintere Kühlmantel 21, 22 -doppelmantelig ausgeführt, wie zuvor erläutert- sind (trotz der markierten Grenze G1) in axialer Richtung durchgängig mit einem fluiden Kühlmittel --vorliegend ein wässriges Kühlmittel-durchströmbar. Kühlmittel wird vom Kühlmittelzulauf 23 mit Zulaufanschluss über den inneren Zulauf-Kühlmantel 25 bis zur Mündung 2 entlang der Wandung des Diffusoreingangs-Flachrohres 6 und der Wandung des Diffusorausgangs-Flachrohrs 5 geführt, um dann über den äußeren wasserkühlbaren Ablauf-Kühlmantel 26 --hier zudem zunächst den vorderen Kühlmantel 21 und dann den hinteren Kühlmantel 22-- über schließlich den Kühlmittelrücklauf 24 mit Rücklaufanschluss abgeführt werden kann.

Die zuvor erwähnte Verbindung V weist das ebenfalls zuvor erwähnte Anschluss-Flachrohr 3 auf, das wie gesagt an der weiteren Grenze G2 zwischen dem Diffusoreingangs-Flachrohr 6 und dem Anschluss-Flachrohr 3 über den Flanschanschluss 8 an das Diffusoreingangs-Flachrohr 6 - also entgegen der Strömungsrichtung des Brenngases - angeflanscht ist. Das Anschluss-Flachrohr 3 ist vorliegend weitgehend ungekühlt. Der Kühlmantel 21, 22 der Kühlanordnung 20 umfasst im Prinzip nur den vorderen Teil des Flach-Langdiffusors 4 jenseits des Flanschanschlusses 8 bis zur Mündung 2 entlang der Strömungsrichtung des Brenngases, also im Wesentlichen die gesamte Längserstreckung des Diffusorausgangs-Flachrohres 5 mit Freistrahlwinkel und des im Wesentlichen zylindrisch ausgeführten Diffusoreingangs-Flachrohres 6.

Das Anschluss-Flachrohr 3 ist vorliegend als Teil des Flach-Langdiffusors 4 in seiner axialen Verlängerung zu verstehen, und ist, wie erläutert, gegen die Strömungsrichtung S an das Diffusorrohr, nämlich hier das Diffusoreingangs-Flachrohr 6 angeschlossen, sodass sich eine gänzlich axiale Anordnung ergibt. Dies hat strömungstechnische Vorteile, da Strömungswiderstände vergleichsweise gering sind. Der vorliegend gezeigte Flanschanschluss 8 kann auch anders oder in Form eines anderen Anschlusses ausgeführt sein. Ebenso kann die an der Grenze G3 gebildete Verbindung des Anschluss-Flachrohres 3 an das Innenrohr des Gaszuführungsrohres 1 auf unterschiedliche Weise realisiert sein.

Vorteilhaft kann zusätzlich oder alternativ --in einer hier nicht dargestellten anderen Ausführungsform--vorgesehen sein, dass der Flach-Langdiffusor 4 zusätzlich zu dem Diffusorrohr mit dem Diffusorausgangs-Flachrohr 5 und dem Diffusoreingangs-Flachrohr 6 einen, insbesondere metallischen, --hier nicht gezeigten-- Verteilerraum aufweist. Der Verteilerraum kann --gegen die Strömungsrichtung gesehen-- an das Diffusorrohr, nämlich das Diffusoreingangs-Flachrohr 6, angeschlossen sein, insbesondere z. B. in Form eines Krümmers gekrümmt sein und/oder sich quer zur axialen Richtung erstrecken. Der Verteilerraum ist einer vorteilhaften Durchmischung von ggfs. mehreren Brenngasen zuträglich und zudem bauraumsparend.

Erkennbar ist bei der hier dargestellten Ausführungsform, dass der Flach-Langdiffusor 4, wie in FIG. 1A gezeigt, von einem an der weiteren Grenze G3 vorgesehenen runden Querschnitt des inneren Gaszuführungsrohres 1.1 verflacht und schließlich in einen flacheren - -von einem runden Querschnitt abweichenden-- Querschnitt D0 an der Mündung 2 des Flach-Langdiffusors 4 übergeht, bzw. sich entlang der Erstreckung des Flach-Langdiffusor 4 entwickelt.

Die Entwicklung des Querschnitts D3 an der Grenze G3, beziehungsweise des Querschnitts D2 an der Grenze G2, beziehungsweise des Querschnitts D1 an der Grenze G1 zum Querschnitts D0 an der Mündung 2 ist mit einer in FIG. 1A erkennbaren Quererstreckung Q und Hocherstreckung H und schematisch im Einzelnen in FIG. 1B erläutert, auf die im Folgenden Bezug genommen wird.

Dazu zeigt FIG. 1B in der oberen Darstellung schematisch den Flach-Langdiffusor 4 zwischen der Grenze G3 mit rundem Querschnitt D3 am Anschluss des Flach-Langdiffusors 4, hier über das Anschluss-Flachrohr 3, an das Innenrohr 1.1 des Gaszuführungsrohres 1 bis zur Mündung 2 mit flachem Querschnitt D0. Dabei sind die vorgenannten Rohre, das heißt das Anschluss-Flachrohr 3, das Diffusoreingangs-Flachrohr 6 und das Diffusorausgangs-Flachrohr 5 des Flach-Langdiffusors 4 entlang der Strömungsrichtung S in der Reihenfolge schematisch gezeigt; nämlich entsprechend der bevorzugten Ausführungsform wie sie in FIG. 1A gezeigt ist.

Erkennbar ist auch, dass im Unterschied zu dem im Wesentlichen runden Querschnitt D3 an der Grenze G3 die Querschnitte D2, D1 und D0 an den Grenzen G2, G1 und an der Mündung 2 flach, bzw. abgeflacht im Vergleich zu dem runden Querschnitt D3.

Die obere schematische Darstellung in Fig. 1B zeigt dazu einen schematischen Schnitt, bzw. eine schematische Draufsicht DR auf den Brenngasinjektor 100 entlang der Quererstreckung Q, das heißt in einer Draufsicht DR, die auch in FIG. 1A eingezeichnet ist. Der untere Teil der FIG. 1B zeigt den Flach-Langdiffusor 4 schematisch in einer seitlichen Schnittansicht bzw. einer Seitenansicht SE, im Wesentlichen über den Bereich der Verbindung V bis zum Anschluss an das Gaszuführungsrohr 1.

Auch in dieser unteren Darstellung der FIG. 1B sind die vorgenannten Querschnitte D3 als runder Querschnitt, bzw. die flachen Querschnitte D2, D1 und D0 schematisch eingezeichnet. In Bezug auf die vorgenannten Querschnitte D3, D2, D1 und D0 ist festzustellen, dass das Diffusorausgangs-Flachrohr 5 des Flach-Langdiffusors 4 an der Grenze G1 zum Diffusoreingangs-Flachrohr 6 eine Quererstreckung Q und eine Hocherstreckung H des Querschnitts D1 aufweist, wobei die Quererstreckung Q zur horizontalen Ausrichtung HO und die Hocherstreckung H zur vertikalen Ausrichtung VE, wie sie in FIG. 5 für den Industrieofen 1000 gezeigt sind, vorgesehen ist.

Das heißt, der Flach-Langdiffusor 4 wird so in Industrieofen 1000 installiert, dass sich --wie in FIG. 5 ersichtlich-- die Quererstreckung Q flach, also parallel zur Glasoberfläche 300, erstreckt, während sich die Hocherstreckung H im Wesentlichen vertikal zur Glasoberfläche 300 erstreckt. Im Industrieofen spannt also die Quererstreckung Q und Hocherstreckung H eine gedachte Ebene im Bereich der Mündung 2 auf, die im Wesentlichen plan mit einer Wandung 200 im Bereich der Injektoreinsatzöffnung im Industrieofen 1000 liegt.

In FIG. 5 ist dazu der Brenngasinjektor 100 schematisch gezeigt mit einem jeweils zugeordneten Wandungselement 40 als Teil einer Wandung 200, wobei das Wandungselement 40 noch in Bezug auf FIG. 3 erläutert wird.

Es ist im Folgenden zu verstehen, dass natürlich die Querschnitte D1, D2 und vor allem D0 unterschiedlich sein können bzw. tatsächlich sind aufgrund des Freistrahlöffnungswinkels, wobei gleichwohl für unterschiedliche Quererstreckungen Q, bzw. Hocherstreckungen H der Querschnitte D0, D1 und D2 (und natürlich des runden Querschnitts D3) die gleichen Bezugszeichen Q für Quererstreckung und H für Hocherstreckung benutzt werden. In Bezug auf den Querschnitt D3 fallen die Quererstreckung Q und die Hocherstreckung H zusammen mit einem in beiden Richtungen gleichen Durchmesser aufgrund des runden Querschnitts des Querschnitts D3.

Demnach, wie in der Seitenansicht SE der FIG. 1B erkennbar, verflacht sich der runde Querschnitt D3 am Eingang des Anschluss-Flachrohres 3; das heißt zu einem relativ dazu abgeflachten Querschnitt D2 an der Grenze G2 zum Diffusoreingangs-Flachrohr 6. Die Verflachung ist vorliegend vor allem in der Abnahme des Durchmessers in Hocherstreckung H und der Zunahme des Durchmessers in Quererstreckung Q zu verstehen. Das heißt, das Anschluss-Flachrohr 3 hat einen Gaszuführungsrohr 1 seitigen runden Querschnitt D3 und einen Diffusoreingangs-Flachrohr 6 seitigen relativ dazu abgeflachten Querschnitt D2. Dabei verjüngt sich das Anschluss-Flachrohr 3 in der Hocherstreckung H vom runden Querschnitt D3 auf den abgeflachten Querschnitt D2 (Seitenansicht SE in Fig. 1B) und verbreitert sich in der Quererstreckung Q vom runden Querschnitt D3 auf den abgeflachten Querschnitt D2 (Draufsicht DR in Fig. 1B). Wenn man so will, nimmt die Quererstreckung Q des runden Durchmessers des Querschnitts D3 zu, während die Hocherstreckung H des Durchmessers des runden Querschnitts D3 abnimmt.

Dies ist bereits auch in der perspektivischen Ansicht der FIG. 1A erkennbar für das Anschluss-Flachrohr 3 und besonders deutlich in der schematischen Ansicht der FIG. 1B zwischen den Grenzen G3 und G2 erkennbar. Die Querschnitte D3 und D2 sind übertrieben deutlich eingezeichnet, um diese Abflachungsanpassung im Anschluss-Flachrohr 3 deutlich zu zeigen.

Das dann in Strömungsrichtung S anschließende Diffusoreingangs-Flachrohr 6 ist in der vorliegenden Ausführungsform erkennbar mit den Querschnitten D2 und D1 flach und zylindrisch ausgeführt. Im Rahmen der vorliegenden, besonders bevorzugten Ausführungsform sind die Querschnitte D2 und D1 identisch. Das heißt, das Diffusoreingangs-Flachrohr 6 ist vollständig mit parallel geführter Rohrwandung in der Quererstreckung und vollständig mit parallel geführter Rohrwandung in der Hocherstreckung Q, H ausgeführt. Das Diffusoreingangs-Flachrohr 6 weist damit besonders gute die Strömung in Strömungsrichtung S vergleichmäßigende Eigenschaften auf. Dies ermöglicht es die ggf. turbulenten Anteile der Gasströmung des Brenngasstroms zu vergleichmäßigen, für den Fall, dass diese im Anschluss-Flachrohr 3 aufgrund der Verflachung des Querschnitts D3 auf D2 entstehen sollten. An der Grenze G1 mit Querschnitt D1 liegt also in Strömungsrichtung S eine bereits gut vergleichmäßigte Strömung des Brenngasstroms vor.

Für die Erfindung ist es von Bedeutung, dass wenigstens genau an dieser Stelle der Grenze G1 zwischen dem Diffusorausgangs-Flachrohr 5 und dem Diffusoreingangs-Flachrohr 6-vorzugsweise wie hier im gesamten Diffusoreingangs-Flachrohr 6-- ein Verhältnis eines offenen Quererstreckungsmaßes zu einem offenen Hocherstreckungsmaß --das heißt betreffend Quererstreckung Q bzw. Hocherstreckung H wenigstens an der Grenze G1 mit Querschnitt D1 -- definiert wird, um die Strömungsparameter des Brenngases in Strömungsrichtung S optimiert einzustellen.

Dieses --hier explizit eingezeichnete-- Verhältnis eines offenen Quererstreckungsmaßes Q' zum Hocherstreckungsmaß H' anhand des Querschnitts D1 liegt in einem Bereich zwischen 5 und 30. Das heißt, das Quererstreckungsmaß ist um den Faktor 5 bis 30-mal größer als das Hocherstreckungsmaß H' für den Querschnitt D1 am in Strömungsrichtung Ende des Diffusoreingangs-Flachrohres.

Das Anschluss-Flachrohr 3 hat an der Grenze G2 zum Diffusoreingangs-Flachrohr 6 einen Öffnungswinkel w3 in der Quererstreckung Q, der bis zu 60°, im besten Fall vorliegend 45°, beträgt. D. h. das Anschluss-Flachrohr 3 hat wenigstens an der Grenze G2 zum Diffusoreingangs-Flachrohr 6, einen Öffnungswinkel w3 in der Quererstreckung Q im Bereich von 10° bis 60° und/oder wenigstens an der Grenze G2 zum Diffusoreingangs-Flachrohr 6 ebenso wie das Diffusoreingangs-Flachrohr 6 das erste Verhältnis des offenen Quererstreckungsmaßes zu dem offenen Hocherstreckungsmaß in einem Bereich zwischen 5 und 30. An der Grenze G2 zum Diffusoreingangs-Flachrohr 6 hat das Anschluss-Flachrohr 3 also dabei ebenso wie das Diffusoreingangs-Flachrohr 6 --hier explizit eingezeichnet-- ein Verhältnis eines offenen Quererstreckungsmaßes Q' zu einem offenen Hocherstreckungsmaß H' in einem Bereich zwischen 5 und 30. Insbesondere ist vorliegend zudem der Querschnitt D2 in Form und Größe wie der Querschnitt D1 gestaltet, da bei dem vorliegenden Ausführungsbeispiel das Diffusoreingangs-Flachrohr 6 wie oben beschrieben zylindrisch ausgeführt ist.

Es zeigt sich, dass für eine sich zwischen den Grenzen G2 und G1 --das heißt über die Erstreckung des als Vergleichmäßiger wirkenden Diffusoreingangs-Flachrohres 6-- entwickelnde weitgehend vergleichmäßigte Strömung eine Gasgeschwindigkeit zwischen 30 bis 150 m/s entwickeln kann, je nach Druck und Mengenwerten der anliegenden Gasströmung. Ganz besonders bevorzugt liegt eine Strömungsgeschwindigkeit im oberen Bereich, das heißt zwischen 100 und 150 m/s.

Weiter ist gemäß der Erfindung vorgesehen, dass sich ab der Grenze G1, das heißt im Diffusorausgangs-Flachrohr 5 gemäß der vorliegenden Ausführungsform, ein Freistrahlöffnungswinkel von bevorzugt w1=0°-25° in der Hocherstreckung H und/oder von bevorzugt w2=0°-15° in der Quererstreckung Q öffnen kann. Vorliegend öffnet sich das Diffusorausgangs-Flachrohr 5 vom Querschnitt D1 zu einem vergrößerten, ebenfalls noch abgeflachten Querschnitt D0, stärker in der Hocherstreckung H mit einem endlichen Freistrahlöffnungswinkel deutlich über 0°, das heißt bevorzugt im Bereich zwischen 10° bis 25° für w1 und in der Quererstreckung gar nicht oder nur leicht, das heißt bevorzugt im Bereich zwischen 0° bis 5° für w2.

In der in FIG. 1B und FIG. 1A gezeigten Ausführungsform ist lediglich ein einziger Freistrahlwinkel w1 von vorliegend besonders bevorzugt 15° eingezeichnet, während der Freistrahlöffnungswinkel w2 in der Quererstreckung Q eingezeichnet ist, aber bei der Ausführungsform vorliegend 0° beträgt. Der erste Freistrahlöffnungswinkel w1 liegt in der Hocherstreckung H generell bevorzugt im Bereich von 0° bis 25°, vorzugsweise zwischen 10° bis 25°, insbesondere um etwa 15° oder wie hier bis etwa 20°.

Anders ausgedrückt ist das Diffusorausgangs-Flachrohr 5, wie in der Draufsicht DR im oberen Teil der FIG. 1B erkennbar, in der Quererstreckung mit paralleler Wandung an den Rändern ausgeführt (also w2=0°), während in der Hocherstreckung H sich das Diffusorausgangs-Flachrohr konisch öffnet mit dem Freistrahlöffnungswinkel w1 von vorliegend 15° oder wie hier bis etwa 20°; bevorzugt zwischen 15° bis 20°. Der Freistrahlöffnungswinkel w1 erstreckt sich von der Grenze G1 bis zur Mündung 2. Es sind auch andere Werte des Freistrahlöffnungswinkels w1 möglich - als vorteilhaft hat sich in der Hocherstreckung ein Freistrahlöffnungswinkel w1 im Bereich zwischen 15° bis 25° erwiesen. Ein Freistrahlöffnungswinkel w2 in der Quererstreckung ist vorliegend im Bereich um 0° bis 5°, dieser kann jedoch bis zu 10°, vorzugsweise zwischen 0° bis 5° betragen. Die Winkel w1, w2 sind hier als volle Winkel zwischen den Rohrberandungen (von Schenkel zu Schenkel) angegeben.

Die Gestaltung des Flach-Langdiffusors 4 gemäß der vorliegenden Ausführungsform führt letztendlich zu einer optimiert eingestellten flachen Flammenformung mit im Wesentlichen flacher, bzw. gefächerter Ausprägung, wie im allgemeinen Teil der Beschreibung erläutert und in den Ansprüchen beansprucht.

Die Reichweite der Flamme in den Industrieofen 1000 über die Glasoberfläche 300 kann weiter eingestellt werden, liegt jedoch aufgrund der oben genannten Parameter einer Gestaltung des Flach-Langdiffusors 4 deutlich über 5 Meter bis zu wenigstens 25 Meter oder 30 Meter; dies je nach Bedarf einstellbar. Die Flachflamme ist dabei vergleichsweise stabil, weist einen ausreichenden Ausbrand und geringe NOx-CO-Werte auf.

Dies ist Grundlage einer optimierten Anordnung von Brenngasinjektoren 100, wie diese in FIG. 5 gezeigt ist, mit optimierter Flammenbedeckung der Glasoberfläche 300 und optimierter Wärmeeinbringung in die Glasoberfläche, die im Vergleich zu bisherigen bekannten Lösungen um bis zu 5 % verbessert ist.

Aufgrund des sich öffnenden Konus mit den vorgenannten Parametern eines Freistrahlwinkels w1, w2 ist die Geschwindigkeit der Flamme im Bereich der Mündung 2 und dahinter, das heißt im unmittelbaren Ausgangsbereich in Strömungsrichtung S, herabgesetzt - sie hat nach dem Flach-Langdiffusor 4 noch Werte zwischen 20 bis 80 m/s, bevorzugt 20 bis 50 m/s und erweist sich damit als besonders bevorzugt mit den oben genannten Stabilitätsmerkmalen. Das heißt die Flamme rundet nicht ab; sie bleibt flach über eine ausreichende Reichweite über die Glasoberfläche 300 mit verbesserter Flächenbedeckung quer zur Strömungsrichtung S.

Einen Beitrag zu dieser stabilen Flammenausbildung bringt vorliegend auch der sich komplett über das Diffusorausgangs-Flachrohr 5 und das Diffusoreingangs-Flachrohr 6 erstreckende Kühlmantel 21, 22 der Kühlvorrichtung 20. Während vorbekannte Lösungen im Stand der Technik lediglich einen den Schutz der Mündung 2 bewirkenden Kühlring vorsehen, dient der Kühlmantel 21, 22 gemäß der vorliegenden Erfindung entlang der gesamten axialen Erstreckung E1 wenigstens der Kühlung des Freistrahlbereichs - gemäß der vorliegenden Ausführungsform erstreckt sich der Kühlmantel auch entlang der gesamten axialen Erstreckung E1 und E2 zwischen der Mündung 2 und der Grenze G2 zwischen dem Diffusoreingangs-Flachrohr 6 und dem Anschluss-Flachrohr 3. Damit wird auch das Diffusoreingangs-Flachrohr 6, das heißt der Vergleichmäßigungsbereich des Flach-Langdiffusors 4, gekühlt. Da dies auch der in FIG. 3 gezeigte Bereich der Injektoreinsatzöffnung 7 ist, schirmt der Kühlmantel 21, 22 damit in vorteilhafter Weise den Flach-Langdiffusor 4 komplett von der keramischen Injektoreinsatzöffnung 7 ab, sodass diese gegen Hitze geschützt ist und der Flach-Langdiffusor 4 praktisch kontaktfrei abschließend an der Mündung 2 der Injektoreinsatzöffnung 7 im Wandungselement 40 eingesetzt werden kann.

Das Diffusorausgangs-Flachrohr 5 weist im Bereich der Mündung 2 ebenfalls eine Quererstreckung Q eine Hocherstreckung H auf, wobei die Quererstreckung zur horizontalen Ausrichtung und die Hocherstreckung zur vertikalen Ausrichtung im Industrieofen vorgesehen ist - gleichwohl unterscheiden sich die in FIG. 1A eingezeichnete Werte von Q und H im Bereich der Mündung 2 aufgrund des Freistrahlöffnungswinkels w1, w2 deutlich von den Werten von Q' und H' für die Querschnitte D1, D2 an den Grenzen G1, G2. An der Mündung 2 ist damit ein zweites Verhältnis eines offenen Quererstreckungsmaßes zu einem offenen Hocherstreckungsmaß kleiner als das erste Verhältnis eines offenen Quererstreckungsmaße zu einem offenen Hocherstreckungsmaß an der Grenze G1, G2 zum Diffusoreingangs-Flachrohr 6, bzw. zum Anschluss-Flachrohr 3.

Dieses zweite Verhältnis im Bereich der Mündung 2 ist also verkleinert aufgrund des Freistrahlöffnungswinkels im Vergleich zum ersten Verhältnis für die Querschnitte D1 und D2. Dieses zweite Verhältnis liegt vorliegend im Bereich zwischen 3 oder 5 einerseits und 20 andererseits im Vergleich zu dem ersten Verhältnis, welches im Bereich zwischen 5 und 30 liegt.

Die nachfolgenden Figuren werden analog weiter Bezug nehmend auf FIG. 1A und FIG. 1B erläutert und zeigen die gleiche Ausführungsform, bei welcher der Freistrahlöffnungswinkel w1 sich nur in der Hocherstreckung H öffnet, wobei in der Quererstreckung Q eine Rohrwandung des Flach-Langdiffusors 4 insbesondere des Diffusorausgangs-Flachrohres 5 parallel geführt ist - entsprechend einem weiteren Freistrahlöffnungswinkel w2 von 0°. In anderen hier nicht gezeigten Ausführungsformen kann sich, wie erläutert, jedoch auch der Freistrahlöffnungswinkel w2 in einem endlichen Bereich bewegen, besonders optimiert in einem Bereich bis zu 10°.

FIG. 2 zeigt dazu in einer perspektivischen Ansicht der Fig. 2A den zuvor erläuterten Brenngasinjektor 100 im System und eingesetzten Zustand mit einem keramischen Wandungselement 40 einer Wandung 200 eines regenerativ oder rekuperativ beheizten Industrieofens 1000, der in FIG. 5 schematisch gezeigt ist. Der Brenngasinjektor 100 hat außerdem die zuvor erläuterten grundsätzlichen Gruppen einer Gaszuführungsrohranordnung 10, einer Kühlanordnung 20 und einer Dosieranordnung 30 und ist damit unter Verweis auf die bereits erläuterten Bezugszeichen in das Wandlungselement 40 eingesetzt. Erkennbar ist die Mündung 2 des Diffusorausgangs-Flachrohres 5 mit der Quererstreckung Q und der Hocherstreckung H im Wandungselement 40. Die Wandung 200 ist dabei der Ofenseite zugewandt. Was in Ansicht der Fig. 2C von der Seite deutlich wird. In der FIG. 2C sind auch der Kühlmittelzulauf 23 mit Zulaufanschluss und der Kühlmittelrücklauf 24 mit Rücklaufanschluss der Kühlvorrichtung 20 erkennbar.

Der Brenngasinjektor 100 ist in eine Injektoreinsatzöffnung 7 in der Wandung 200 eingesetzt, was aus der Rückansicht der FIG. 2B erkennbar ist. In den in FIG. 2A erkennbaren Kontaktspalt K an der planen Mündung 2 mit der Wandung 200 kann hitzeresistentes Füll- und/oder Dichtungsmaterial eingebracht werden, das insbesondere formbar oder elastisch ist; dies kann z. B. Glaswolle oder eine keramische Dichtungsmasse oder dergleichen hitzeresistentes und formbares oder elastisches Füll- und/oder Dichtungsmaterial sein. Somit kann der Brenngasinjektor 100 auch Richtungsjustagen unterworfen werden, ohne dass sich der Kontaktspalt K öffnet und dennoch wird die Ofenhitze durch die Wandung 200 und das hitzeresistentes und formbare oder elastische Füll- und/oder Dichtungsmaterial zurückgehalten wird. Außerdem ist aber die Kontaktfreiheit zwischen Brenngasinjektor und der Keramik des keramischen Wandungselements 40 auch bei ungewollten Absenkungen des Brenngasinjektors oder dergleichen gewährleistet.

Insgesamt führt der plane Kühlmantel 21 ebenso wie die plane Mündung 2 zu einer planen angrenzenden Öffnung für die Flamme, unmittelbar an der Schmelzwanne seitigen Wandung 200 des Industrieofens. Um eine Justage des Brenngasinjektors 100 zu ermöglichen, ist die Injektoreinsatzöffnung 7 als vom Kontaktspalt K sich nach hinten konisch erweiternd ausgeführt, sodass darin jedenfalls der Flach-Langdiffusor mit dem Diffusorausgangs-Flachrohr und dem Diffusoreingangs-Flachrohr 5, 6 Platz findet. FIG. 3 zeigt in einer Schnittansicht die nach hinten sich konisch erweiternden Aspekte der Injektoreinsatzöffnung 7 vom Kontaktspalt K an der ofenseitigen Wandung 200 nach hinten; also entgegen der Strömungsrichtung S.

Aus FIG. 3 ist darüber hinaus erkennbar, dass der wasserkühlbare Kühlmantel 21, 22 vorliegend im Rahmen der Kühlvorrichtung tatsächlich zweimantelig ausgebildet ist, wobei ein innerer wasserkühlbarer Zulauf-Kühlmantel 25 und ein äußerer wasserkühlbarer Ablauf-Kühlmantel 26 vom Kühlmittelzulauf 23 mit Zulaufanschluss zum Kühlmittelrücklauf 24 mit Rücklaufanschluss wie zuvor erläutert ausgeführt ist. Der innere wasserkühlbare Zulauf-Kühlmantel 25 und der äußere wasserkühlbare Ablauf-Kühlmantel 26 sind über radiale Ringöffnungen kühlmittelaustauschbar in Verbindung.

FIG. 3 zeigt in der Seitenansicht auch die Injektoröffnung derart, dass in der Hocherstreckung der Freistrahlöffnungswinkel w1 zu einer konischen Erweiterung des Diffusorausgangs-Flachrohres 5 führt. Gleichwohl ist die Außenabmessung des Brenngasinjektors 100 mit dem Kühlmantel 21, 22 weitgehend parallel, bzw. parallel im Bereich des Diffusoreingangs-Flachrohres 6. Außerdem verjüngen sich die Außenabmessungen des Brenngasinjektors 100 leicht konisch in Strömungsrichtung S im Bereich des Diffusorausgangs-Flachrohres 5. Dies führt, wie in FIG. 3 erkennbar dazu, dass sich der Kühlmantel in der Hocherstreckung derart verjüngend den in der Hocherstreckung sich öffnenden Freistrahlöffnungswinkel kompensiert, dass eine Außenabmessung des Diffusorausgangs-Flachrohres 5 sich zur Mündung 2 verjüngt oder parallel geführt ist.

Des Weiteren zeigt FIG. 3 dass der Brenngasinjektor 100 optional mit einer Dosiereinrichtung 30 mit einem ersten dosierbaren Brenngaszulauf, insbesondere Gasdosierungsanschluss einer Dosierzuführung 31 und einem zweiten dosierbaren Brenngaszulauf, insbesondere Gasdosierungsanschluss einer Dosierzuführung 32, ausgeführt werden kann. Dazu zeigt FIG.3 das Gaszuführungsrohr 1 und das Anschluss-Flachrohr 3 zur einstellenden Drosselung und/oder Eindüsung einer Strömung mit einem innenliegenden Stellmechanismus und einem Zentralzuführungsrohr 33, das im Folgenden erläutert wird.

Der erste dosierbare Brenngaszulauf 31 kann bei dieser Ausführungsform auch komplett entfallen, sodass Brenngas nur über den zweiten dosierbaren Brenngaszulauf, insbesondere Gasdosierungsanschluss einer Dosierzuführung 32, als Haupt-Brenngaszuführung zugeführt wird. Es kann jedoch auch umgekehrt sein; d. h. der zweite dosierbare Brenngaszulauf, insbesondere Gasdosierungsanschluss einer Dosierzuführung 32 kann bei einer anderen Ausführungsform komplett entfallen, sodass Brenngas nur über den ersten dosierbaren Brenngaszulauf 31 in axialer Ausrichtung zugeführt wird.

Vorliegend kann in einer weiteren Abwandlung über den ersten dosierbaren Brenngaszulauf 31 in das Gaszuführungsrohr 1, nämlich das Zentralzuführungsrohr 33 im zentralen Bereich des Gaszuführungsrohres 1 Brenngas für eine Zentral- oder Pilotflamme in das Diffusoreingangs-Flachrohr 6 eingebracht werden. Das heißt, wie hier gezeigt, endet das Zentralzuführungsrohr 33 endet etwa mittig im Querschnitt und axial im Diffusoreingangs-Flachrohr 6 mit einer Zentralmündung M eines Zentralzuführungsrohres 33, z. B. so wie dies in FIG. 3 eingezeichnet ist. Des Weiteren ist ein Stellmechanismus 35 mit Dosiermittel im Bereich der Grenze G2 am Flanschanschluss 8, also über dem Durchmesser D2, beispielsweise als ein Venturi-Dosierer oder dergleichen vorgesehen.

Der erste dosierbare Brenngaszulauf, insbesondere Gasdosierungsanschluss einer Dosierzuführung 31 mit dem Dosiermittel und dem Zentralzuführungsrohr 33 können zudem eingebaut oder ausgebaut werden aus dem Brenngasinjektor 100, welcher insofern erweiterbar oder rückbaubar gestaltet ist.

Eine solche Zentraleindüsung von Brenngas führt zu einer zusätzlichen zentralen Brenngasführung auf der Achse des Gaszuführungsrohres 1, die flammenstabilisierend und flammenformend genutzt werden kann. Diese Maßnahme ist grundsätzlich optional zuschaltbar und erweist sich bei bestimmten Anwendungen als besonders vorteilhaft.

Über die Hocherstreckung kann die Verjüngung am Querschnitt D2 an der Grenze G2, wie zuvor erläutert, beim Anschluss-Flachrohr 3 oder über die Erstreckung E3 des Anschluss-Flachrohres 3 genutzt werden, um das über den zweiten Dosieranschluss, d. h. den zweiten dosierbaren Brenngaszulauf, insbesondere Gasdosierungsanschluss einer Dosierzuführung 32 als Haupt-Brenngaszuführung zugeführte Brenngas zu dosieren und/oder zu dosieren in Abstimmung mit der Zentraleindüsung von Brenngas des ersten dosierbaren Brenngaszulaufs, insbesondere eines Gasdosierungsanschlusses der ersten Dosierzuführung 31. Damit kann das Gaszuführungsrohr 1 und/oder das Anschluss-Flachrohr 3 zur einstellenden Drosselung und/oder Eindüsung einer Strömung einen Stellmechanismus 35 mit Drosselkörper oder dergleichen Dosiermittel und/oder eine Zentralmündung M eines Zentralzuführungsrohres 33 aufweisen, insbesondere wobei der Drosselkörper und/oder die Zentralmündung im bzw. bis zum Bereich des Anschluss-Flachrohres 3 und/oder das Diffusoreingangs-Flachrohres 6 angeordnet sind.

FIG. 4A und FIG. 4B zeigen den Flach-Langdiffusor 4 mit den zuvor erläuterten Merkmalen unter Verweis auf die genannten Bezugszeichen. Der Flach-Langdiffusor 4 hat sowohl in der Ausführungsform der FIG. 4A als auch in der Ausführungsform der FIG. 4B Anbringungsstreben 37 für das zuvor erläuterte Stellmechanismus 35 mit Dosiermittel bzw. das Zentralzuführungsrohr 33 mit Zentralmündung M.

Bei der Ausführungsform der FIG. 4A kann der zweimantelig ausgeführte Kühlmantel mit Vorlauf und Rücklauf --wie erläutert mit einem inneren Zulauf-Kühlmantel 25 mit Kühlmittelzulauf 23 mit Zulaufanschluss und einen äußeren wasserkühlbaren Ablauf-Kühlmantel 26 mit einem Kühlmittelrücklauf 24 mit Rücklaufanschluss-- ausgeführt sein; dazu stehen diese in einem Bereich 27 kommunizierend über Verbindungsmittel in Verbindung.

Dieser Verbindungsbereich 27 kann beispielsweise radiale Ringöffnungen in einer Wandung aufweisen, sodass Kühlmittel austauschbar zwischen dem Zulauf-Kühlmantel 25 und dem Ablauf-Kühlmantel 26 ist.

Bei FIG. 4 ist erkennbar jeder der Kühlmäntel --der innere Zulauf-Kühlmantel 25 und der äußere Ablauf-Kühlmantel 26-- als Ringkanal ausgeführt. Diese Ringkanäle sind vorteilhaft in einem rückseitigen Bereich des Anschlusses 28 über eine Wandung getrennt und in einem Verbindungsbereich 27 zur Mündung 2 hin kann Kühlmittel ausgetauscht werden in der zuvor erläuterten Art. In beiden Bereichen des Verbindungsbereiches 27 und des Anschlusses 28 sind die Kühlmäntel damit als Ringbereiche mit Hohlräumen ausgeführt. Die nicht näher bezeichnete Wandung ist hier als Trennwand ausgeführt; sie kann jedoch auch mehrwandig ausgeführt sein.

Insbesondere kann die Wandung eine innere Struktur aufweisen, welche den Kühlmittelaustausch unterstützt. Beispielsweise können hier einzelne von Kühlmittel durchströmbare Röhren vorgesehen sein, die bestimmten Winkelpositionen umfänglich in der Wandung angeordnet sind. Dadurch können die oben genannten Bereiche des Verbindungsbereiches 27 und des Anschlusses 28 mit den Kühlmittel durchströmbaren Röhren verbunden sein. Auf diese Weise lässt sich eine angepasste Kühlmitteldosierung und Führung erreichen.

FIG. 5 zeigt einen regenerativ oder rekuperativ beheizten Industrieofen 1000 mit einer Anzahl von Systemen jeweils eines keramischen Wandungselements 40 und jeweils einem eingesetzten, Brenngasinjektor 100, in jeweils wenigstens eine keramischen Injektoreinsatzöffnung 7 des Wandungselements 40. Jedes System umfasst ein keramisches Wandungselement 40 in einer Wandung 200 des regenerativ oder rekuperativ beheizten Industrieofens 1000 mit einer keramischen Injektoreinsatzöffnung 7 ausgebildet zum Einsatz eines Brenngasinjektors 100; d. h. hier mit einem eingesetzten Brenngasinjektor 100 oberhalb einer Glasoberfläche 300 von geschmolzenem Glas G. Eine Quererstreckung Q des Flach-Langdiffusors 4 ist zur horizontalen Ausrichtung HO und eine Hocherstreckung H des Flach-Langdiffusors 4 ist zur vertikalen Ausrichtung VE im Industrieofen 1000 vorgesehen. Eine Luftzufuhr als Verbrennungsluft kann über einen oder mehrere separate Luftkanäle 50 erfolgen. Der oder die Luftkanäle 50 können vorzugsweise in der Nähe der Injektoreinsatzöffnung, insbesondere hier über und/oder unter der Injektoreinsatzöffnung, ggfs. auch neben der Injektoreinsatzöffnung, für den Brenngasinjektor in den Ofenraum mit z. B. einer Glaswanne, münden. Die Anordnung ist derart, dass eine Flamme mit im Wesentlichen flächenartiger Flammenkonfiguration ausgebildet wird.

Mit der oben beschriebenen Dosiereinrichtung 30 lässt sich zur Bildung einer fächer- und flächenartigen Flamme über dem Glas G mittels der Luft dem Brenngas aus dem Gaszuführungsrohr 1 und dem Anschluss-Flachrohr 3 sowie den weiteren Leitungsführungen der Gaszuführungsrohranordnung 10 in axialer Strömungsrichtung im Flach-Langdiffusors 4 bis zur Mündung 2 eine periphere Hauptströmung und eine mittige Zentralströmung ausbilden. Diese können so eingestellt werden, dass sich zwischen 0 % bis 40 % eines Massenvolumens in der mittigen Zentralströmung ausbilden. Dies kann für eine variable Flammeinstellung genutzt werden wobei bevorzugt eine Strömungsgeschwindigkeit in der peripheren Hauptströmung im Verhältnis zu einer Strömungsgeschwindigkeit in der mittigen Zentralströmung zwischen 0.5 bis 1.5 beträgt. Das Verhältnis liegt bevorzugt zwischen 0.9 und 1.1, insbesondere im Bereich von 1, wenn das Massenvolumen in der mittigen Zentralströmung bei 30 % des Massenvolumens in der peripheren Hauptströmung liegt.

Für den Brenngasinjektor 100 ist in dem Diffusoreingangs-Flachrohr 6, insbesondere an der Grenze G1, G2 zwischen dem Diffusorausgangs-Flachrohr 5 und dem Diffusoreingangs-Flachrohr 6, der Querschnitt derart ausgebildet ist, dass eine Gasgeschwindigkeit im Diffusoreingangs-Flachrohr 6 zwischen 30 und 150 m/s beträgt bzw. an der Mündung 2 ist der Querschnitt und Freistrahlwinkel derart ausgebildet, dass eine Gasgeschwindigkeit im Diffusorausgangs-Flachrohr 5, insbesondere an der Mündung 2 zwischen 20 und 80 m/s, insbesondere zwischen 20 und 50 m/s beträgt.

Die Flächenbedeckung, die Freistrahlcharakteristik und die Reichweite der stabilen Injektorflamme sind bevorzugt einstellbar. Die Reichweite einer solchen, dann stabil ausgebildeten und flachen Flamme mit in etwa fächerartiger bis flächenartiger Konfiguration liegt bei 10 m bis 15 m, bevorzugt um die 12 m in die Glaswanne hinein.

Insgesamt hat die vorliegende Erfindung damit bei hohem Flächenbedeckungsgrad Vorteile gegenüber dem Stand der Technik infolge besseren Ausbrands, geringer NOx/CO-Produktion und vor allem einer optimierbaren Reichweite und Flächenbedeckung der flachen insgesamt flächenartigen Flammenkonfiguration. Die Abstände der Brenngasinjektoren mit Langflachdiffusoren lassen sich je nach Bedarf in der Glaswanne einrichten. Insgesamt wird durch einen flachen Brenngasinjektor 100 mit dem genannten Flach-Langdiffusor 4 ein überraschend hoher Energiefluss in die Glasschmelze bei einem Industrieofen erreicht, das heißt eine Verbesserung des Energieflusses im Bereich von 1 bis wenigstens 5%.

### LISTE DER VERWENDETEN BEZUGSZEICHEN

- 1: Gaszuführungsrohr
- 1.1: inneres Gaszuführungsrohr
- 1.2: äußeres Gaszuführungsrohr
- 2: Mündung
- 3: Anschluss-Flachrohr
- 4: Flach-Langdiffusor
- 5: Diffusorausgangs-Flachrohr
- 6: Diffusoreingangs-Flachrohr
- 7: keramische Injektoreinsatzöffnung
- 8: Flanschanschluss
- 10: Gaszuführungsrohranordnung
- 20: Kühlanordnung
- 21: vorderer Kühlmantel
- 22: hinterer Kühlmantel
- 23: Kühlmittelzulauf mit Zulaufanschluss
- 24: Kühlmittelrücklauf mit Rücklaufanschluss
- 25: innerer Zulauf-Kühlmantel
- 26: äußerer Ablauf-Kühlmantel
- 27, 27`: Verbindungsbereich / Kommunizierbereich
- 28, 28': Bereich des Anschlusses
- 30: Dosieranordnung
- 31: erster dosierbarer Brenngaszulauf, insbesondere Gasdosierungsanschluss einer Dosierzuführung
- 32: zweiter dosierbarer Brenngaszulauf, insbesondere Gasdosierungsanschluss einer Dosierzuführung
- 33: Zentralzuführungsrohr mit Zentralmündung M
- 35: Stellmechanismus mit Dosiermittel
- 37: Anbringungsstreben
- 40: keramisches Wandungselement
- 50: Luftkanäle
- 100: Brenngasinjektor
- 200: Wandung
- 300: Glasoberfläche
- 1000: Industrieofen
- D0, D1, D2, D3: Querschnitt
- DR: Draufsicht
- E1, E2, E3: axiale Erstreckung
- G: Glas
- G1, G2, G3: Grenze
- H: Hocherstreckung
- H': Hocherstreckungsmaß
- HO: horizontale Ausrichtung
- K: Kontaktspalt
- M: Zentralmündung
- Q: Quererstreckung
- Q': Quererstreckungsmaß
- S: Strömungsrichtung
- SE: Seitenansicht
- V: Verbindung
- VE: vertikale Ausrichtung
- w1, w2: Freistrahlöffnungswinkel
- w3: Öffnungswinkel

## Patentansprüche

1. Brenngasinjektor (100) zur Befeuerung eines regenerativ beheizten Industrieofens (1000) mit einem keramischen Wandungselement mit einer keramischen Injektoreinsatzöffnung, wobei der Brenngasinjektor (100) ein Gaszuführungsrohr (1) und eine Mündung (2) aufweist, wobei deren Verbindung (V) mit einem Langdiffusor gebildet ist, wobei der Langdiffusor ein die Mündung (2) ausbildendes und metallisches, kühlbares Diffusorrohr aufweist, wobei
- der Langdiffusor als ein Flach-Langdiffusor (4) ausgebildet ist, wobei das Diffusorrohr mit einem Diffusorausgangs-Flachrohr (5) und einem Diffusoreingangs-Flachrohr (6) gebildet ist, wobei
- das Diffusorausgangs-Flachrohr (5) und das Diffusoreingangs-Flachrohr (6) eine Quererstreckung (Q) und eine Hocherstreckung (H) aufweist,
- ein erstes Verhältnis eines offenen Quererstreckungsmaßes zu einem offenen Hocherstreckungsmaß in einem Bereich zwischen 5 und 30 liegt, wobei
- der Langdiffusor mit einem Freistrahlöffnungswinkel gebildet ist, und
- der Freistrahlöffnungswinkel (w1, w2) sich in der Hocherstreckung (H) und/oder der Quererstreckung (Q) des Flach-Langdiffusors (4) öffnet, nämlich des Diffusorausgangs-Flachrohres (5) öffnet, und
- das Diffusorrohr dazu vorgesehen ist, zu der keramischen Injektoreinsatzöffnung (7) einen Abschluss an der Mündung (2) des Brenngasinjektors zu bilden, und
- wenigstens das Diffusorausgangs-Flachrohr (5) des Flach-Langdiffusors (4) entlang seiner gesamten axialen Erstreckung (E1) zwischen der Mündung (2) und der Grenze (G1) zwischen dem Diffusorausgangs-Flachrohr (5) und dem Diffusoreingangs-Flachrohr (6) von einem, von flüssigem Kühlmittel durchströmbaren, Kühlmantel (21) umfasst ist, wobei der Kühlmantel (21) mit dem Diffusorrohr dazu vorgesehen ist, einen Abschluss zu der keramischen Injektoreinsatzöffnung (7) an der Mündung (2) des Brenngasinjektors (100) zu bilden.

2. Brenngasinjektor nach Anspruch 1, wobei wenigstens an einer Grenze (G1) zwischen dem Diffusorausgangs-Flachrohr (5) und dem Diffusoreingangs-Flachrohr (6) die Quererstreckung (Q) und die Hocherstreckung (H) vorliegt und das Verhältnis wenigstens an der Grenze (G1) und in dem Bereich des Diffusoreingangs-Flachrohres (6) bis zu einer Grenze (G2) zu einem Anschluss-Flachrohr (3) vorliegt.

3. Brenngasinjektor nach Anspruch 1 oder 2, wobei der von einem flüssigen Kühlmittel durchströmbare Kühlmantel wasserkühlbar ist und das Kühlmittel Wasser ist.

4. Brenngasinjektor nach einem der Ansprüche 1 bis 3, wobei
das Diffusorrohr dazu vorgesehen ist, zu der keramischen Injektoreinsatzöffnung (7) einen kontaktfreien Abschluss an der Mündung (2) des Brenngasinjektors zu bilden, wobei das Diffusorausgangs-Flachrohr (5) des Flach-Langdiffusors (4) von dem Kühlmantel (21) umfasst ist, der ebenfalls dazu vorgesehen ist einen kontaktfreien Abschluss zu der keramischen Injektoreinsatzöffnung (7) an der Mündung (2) des Brenngasinjektors (100) zu bilden.

5. Brenngasinjektor nach einem der Ansprüche 1 bis 4, wobei
das Diffusorausgangs-Flachrohr (5) im Bereich der Mündung (2) ebenfalls eine Quererstreckung und eine Hocherstreckung aufweist, wobei die Quererstreckung zur horizontalen Ausrichtung und die Hocherstreckung zur vertikalen Ausrichtung im Industrieofen vorgesehen ist, wobei
- an der Mündung (2) ein zweites Verhältnis eines offenen Quererstreckungsmaßes zu einem offenen Hocherstreckungsmaß kleiner ist als das erste Verhältnis des offenen Quererstreckungsmaßes zu dem offenen Hocherstreckungsmaß an der Grenze (G1) zwischen dem Diffusorausgangs-Flachrohr (5) und dem Diffusoreingangs-Flachrohr (6), wobei das zweite Verhältnis in einem Bereich zwischen 5 und 20 liegt.

6. Brenngasinjektor nach einem der Ansprüche 1 bis 5, wobei
sich ein erster Freistrahlöffnungswinkel (w1) in der Hocherstreckung (H) im Bereich von 0° bis 25°, vorzugsweise10° bis 25°, befindet, und/oder sich ein zweiter Freistrahlöffnungswinkel (w2) in der Quererstreckung (Q) im Bereich von 0° bis 15°, insbesondere im Bereich von 0° bis 5°, befindet, wobei einer der Freistrahlöffnungswinkel (w1, w2) in der Hocherstreckung (H) und Quererstreckung (Q) einen endlichen Wert aufweist.

7. Brenngasinjektor nach einem der Ansprüche 1 bis 6, wobei
- sich ein Anschluss-Flachrohr (3) des Flach-Langdiffusors (4) von einem runden Querschnitt des Gaszuführungsrohres (1) zu einem relativ dazu abgeflachten Querschnitt an der Grenze (G2) zum Diffusoreingangs-Flachrohr (6) verflacht, wobei das Anschluss-Flachrohr (3) einen Gaszuführungsrohr (1) seitigen runden Querschnitt und einen Diffusoreingangs-Flachrohr (6) seitigen relativ dazu abgeflachten Querschnitt aufweist, wobei sich das Anschluss-Flachrohr (3) in der Hocherstreckung von dem runden auf den abgeflachten Querschnitt verjüngt und in der Quererstreckung von dem runden auf den abgeflachten Querschnitt verbreitert.

8. Brenngasinjektor nach Anspruch 7, wobei das Anschluss-Flachrohr (3)
- wenigstens an der Grenze (G2) zum Diffusoreingangs-Flachrohr (6), einen Öffnungswinkel (w3) in der Quererstreckung (Q) im Bereich von 10° bis 60° aufweist, und/oder
- wenigstens an der Grenze (G2) zum Diffusoreingangs-Flachrohr (6) ebenso wie das Diffusoreingangs-Flachrohr (6) das erste Verhältnis des offenen Quererstreckungsmaßes zu dem offenen Hocherstreckungsmaß in einem Bereich zwischen 5 und 30 aufweist.

9. Brenngasinjektor nach einem der Ansprüche 1 bis 8, wobei
das Diffusoreingangs-Flachrohr (6) des Flach-Langdiffusors (4) in seinem überwiegendem Teil, insbesondere praktisch entlang seiner gesamten axialen Erstreckung (E2) zwischen der Grenze (G1) zwischen dem Diffusorausgangs-Flachrohr (5) und dem Diffusoreingangs-Flachrohr (6) und der Grenze (G2) zwischen dem Diffusoreingangs-Flachrohr (6) und dem Anschluss-Flachrohr (3) von einem weiteren bzw. dem, insbesondere wasserkühlbaren, Kühlmantel (21) umfasst ist.

10. Brenngasinjektor nach einem der Ansprüche 1 bis 9, wobei
das Diffusoreingangs-Flachrohr (6) parallel geführte Rohrwandungen in der Quererstreckung und in der Hocherstreckung aufweist, insbesondere parallel geführte Rohrwandungen vollständig zwischen einer Grenze (G2) am Anschluss-Flachrohr (3) und einer Grenze (G1) am Diffusorausgangs-Flachrohr (5) vorliegen.

11. Brenngasinjektor nach einem der Ansprüche 1 bis 10, wobei
sich der, insbesondere der erste und/oder zweite, Freistrahlöffnungswinkel (w1, w2) sich nur in der Hocherstreckung öffnet, wobei in der Quererstreckung eine Rohrwandung des Flach-Langdiffusors (4) insbesondere des Diffusorausgangs-Flachrohres (5), parallel geführt ist.

12. Brenngasinjektor nach einem der Ansprüche 1 bis 11, wobei
der wasserkühlbare Kühlmantel zweimantelig ausgebildet ist, wobei ein innerer wasserkühlbarer Zulauf-Kühlmantel (21, 23) und ein äußerer wasserkühlbarer Ablauf-Kühlmantel (22, 26) Kühlmittel austauschbar in Verbindung stehen, insbesondere über radiale Öffnungen Kühlmittel austauschbar in Verbindung stehen.

13. Brenngasinjektor nach einem der Ansprüche 1 bis 12, wobei
- der Kühlmantel sich in der Hocherstreckung derart verjüngt, dass in der Hocherstreckung und/oder in der Quererstreckung der sich öffnende Freistrahlöffnungswinkel kompensiert wird, und/oder
- eine Außenabmessung des Diffusorausgangs-Flachrohres (5) sich zur Mündung verjüngt
oder parallel verläuft, und/oder
- eine Außenabmessung des Diffusoreingangs-Flachrohres (6) zur Mündung parallel verläuft und sich eine Außenabmessung des Diffusorausgangs-Flachrohres (5) verjüngt.

14. Brenngasinjektor nach einem der Ansprüche 1 bis 13, wobei das Gaszuführungsrohr (1) und/oder das Anschluss-Flachrohr (3) zur einstellenden Drosselung und/oder Eindüsung einer Strömung einen innenliegenden Stellmechanismus (35) und/oder ein Zentralzuführungsrohr (33) aufweisen.

15. Brenngasinjektor nach einem der Ansprüche 1 bis 14, wobei
das Gaszuführungsrohr (1) und/oder das Anschluss-Flachrohr (3) zur einstellenden Drosselung und/oder Eindüsung einer Strömung einen Drosselkörper und/oder eine Zentralmündung aufweisen, insbesondere wobei der Drosselkörper des Stellmechanismus (35) und/oder die Zentralmündung des Zentralzuführungsrohres (33) im bzw. bis zum Bereich des Anschluss-Flachrohres (3) und/oder das Diffusoreingangs-Flachrohres (6) angeordnet sind.

16. System aus einem keramischen Wandungselement mit einer keramischen Injektoreinsatzöffnung (7), ausgebildet zum Einsatz eines Brenngasinjektors (100), und einem Brenngasinjektor (100), für einen regenerativ beheizten Industrieofen (1000), wobei bei dem System
- der Brenngasinjektor (100) nach einem der Ansprüche 1 bis 15 ausgebildet ist, und
- die Quererstreckung (Q) des Flach-Langdiffusors (4) zur horizontalen Ausrichtung (HO) und die Hocherstreckung (H) des Flach-Langdiffusors (4) zur vertikalen Ausrichtung (VE) im Industrieofen (1000) vorgesehen ist.

## Claims

1. Combustion-gas injector (100) for firing a regeneratively heated industrial furnace (1000) with a ceramic wall element having a ceramic injector insert opening, wherein the combustion-gas injector (100) has a gas feed tube (1) and a mouth (2), wherein the connection (V) thereof is formed by a longitudinal diffusor, wherein the longitudinal diffusor has a metallic coolable diffusor tube which forms the mouth (2), wherein
- the longitudinal diffusor is in the form of a flat longitudinal diffusor (4), wherein the diffusor tube is formed with a diffusor-exit flat tube (5) and a diffusor-entry flat tube (6), wherein
- the diffusor-exit flat tube (5) and the diffusor-entry flat tube (6) have a transverse extent (Q) and a height extent (H),
- a first ratio of an open transverse-extent dimension to an open height-extent dimension lies in a range between 5 and 30, wherein
- the longitudinal diffusor is formed with a free-jet opening angle, and
- the free-jet opening angle (w1, w2) opens in the height extent (H) and/or in the transverse extent (Q) of the flat longitudinal diffusor (4), specifically of the diffusor-exit flat tube (5), and
- the diffusor tube is intended for forming in relation to the ceramic injector insert opening (7) a termination at the mouth (2) of the combustion-gas injector, and
- at least the diffusor-exit flat tube (5) of the flat longitudinal diffusor (4) is surrounded, along its entire axial extent (E1) between the mouth (2) and the boundary (G1) between the diffusor-exit flat tube (5) and the diffusor-entry flat tube (6), by a cooling jacket (21) which is able to be flowed through by liquid coolant, wherein the cooling jacket (21), with the diffusor tube, is intended for forming a termination in relation to the ceramic injector insert opening (7) at the mouth (2) of the combustion-gas injector (100).

2. Combustion-gas injector according to Claim 1, wherein the transverse extent (Q) and the height extent (H) are provided at least at a boundary (G1) between the diffusor-exit flat tube (5) and the diffusor-entry flat tube (6), and the ratio is provided at least at the boundary (G1) and in the region of the diffusor-entry flat tube (6) as far as a boundary (G2) with a connection flat tube (3).

3. Combustion-gas injector according to Claim 1 or 2, wherein the cooling jacket able to be flowed through by a liquid coolant is water-coolable and the coolant is water.

4. Combustion-gas injector according to one of Claims 1 to 3, wherein the diffusor tube is intended for forming in relation to the ceramic injector insert opening (7) a contact-free termination at the mouth (2) of the combustion-gas injector, wherein the diffusor-exit flat tube (5) of the flat longitudinal diffusor (4) is surrounded by the cooling jacket (21), which is likewise intended for forming a contact-free termination in relation to the ceramic injector insert opening (7) at the mouth (2) of the combustion-gas injector (100).

5. Combustion-gas injector according to one of Claims 1 to 4, wherein the diffusor-exit flat tube (5) also has a transverse extent and a height extent in the region of the mouth (2), wherein the transverse extent is intended for horizontal orientation, and the height extent is intended for vertical orientation, in the industrial furnace, wherein
- at the mouth (2), a second ratio of an open transverse-extent dimension to an open height-extent dimension is smaller than the first ratio of the open transverse-extent dimension to the open height-extent dimension at the boundary (G1) between the diffusor-exit flat tube (5) and the diffusor-entry flat tube (6), wherein the second ratio lies in a range between 5 and 20.

6. Combustion-gas injector according to one of Claims 1 to 5, wherein a first free-jet opening angle (w1) in the height extent (H) is in the range from 0° to 25°, preferably 10° to 25°, and/or a second free-jet opening angle (w2) in the transverse extent (Q) is in the range from 0° to 15°, in particular in the range from 0° to 5°, wherein one of the free-jet opening angles (w1, w2) in the height extent (H) and transverse extent (Q) has a finite value.

7. Combustion-gas injector according to one of Claims 1 to 6, wherein a connection flat tube (3) of the flat longitudinal diffusor (4) flattens out from a round cross section of the gas feed tube (1) to a relatively flattened cross section at the boundary (G2) with the diffusor-entry flat tube (6), wherein the connection flat tube (3) has a round cross section at the side of the gas feed tube (1) and has a relatively flattened cross section at the side of the diffusor-entry flat tube (6), wherein the connection flat tube (3) narrows in the height extent from the round cross section to the flattened cross section, and widens in the transverse extent from the round cross section to the flattened cross section.

8. Combustion-gas injector according to Claim 7, wherein the connection flat tube (3),
- at least at the boundary (G2) with the diffusor-entry flat tube (6), has an opening angle (w3) in the transverse extent (Q) in the range from 10° to 60°, and/or
- at least at the boundary (G2) with the diffusor-entry flat tube (6), just like the diffusor-entry flat tube (6), has the first ratio of the open transverse-extent dimension to the open height-extent dimension in a range between 5 and 30.

9. Combustion-gas injector according to one of Claims 1 to 8, wherein the diffusor-entry flat tube (6) of the flat longitudinal diffusor (4) is surrounded over the majority thereof, in particular practically along its entire axial extent (E2) between the boundary (G1) between the diffusor-exit flat tube (5) and the diffusor-entry flat tube (6) and the boundary (G2) between the diffusor-entry flat tube (6) and the connection flat tube (3), by a further or the, in particular water-coolable, cooling jacket (21) .

10. Combustion-gas injector according to one of Claims 1 to 9, wherein the diffusor-entry flat tube (6) has tube walls disposed in a parallel manner in the transverse extent and in the height extent, in particular there are tube walls disposed in a parallel manner completely between a boundary (G2) at the connection flat tube (3) and a boundary (G1) at the diffusor-exit flat tube (5).

11. Combustion-gas injector according to one of Claims 1 to 10, wherein the, in particular the first and/or second, free-jet opening angle (w1, w2) opens only in the height extent, wherein, in the transverse extent, a tube wall of the flat longitudinal diffusor (4), in particular of the diffusor-exit flat tube (5), is disposed in a parallel manner.

12. Combustion-gas injector according to one of Claims 1 to 11, wherein the water-coolable cooling jacket is of double-jacket form, wherein an inner water-coolable inflow cooling jacket (21, 23) and an outer water-coolable outflow cooling jacket (22, 26) are connected such that coolant is exchangeable, in particular are connected such that coolant is exchangeable via radial openings.

13. Combustion-gas injector according to one of Claims 1 to 12, wherein
- the cooling jacket narrows in the height extent in such a way that, in the height extent and/or in the transverse extent, the opening free-jet opening angle is compensated, and/or
- an outer dimension of the diffusor-exit flat tube (5) extends in a parallel manner or narrows in the direction of the mouth, and/or
- an outer dimension of the diffusor-entry flat tube (6) extends in a parallel manner in the direction of the mouth and an outer dimension of the diffusor-exit flat tube (5) narrows.

14. Combustion-gas injector according to one of Claims 1 to 13, wherein the gas feed tube (1) and/or the connection flat tube (3), for adjusting throttling and/or flow injection purposes, have/has an inner adjustment mechanism (35) and/or a central feed tube (33) .

15. Combustion-gas injector according to one of Claims 1 to 14, wherein the gas feed tube (1) and/or the connection flat tube (3), for adjusting throttling and/or flow injection purposes, have/has a throttle body and/or a central mouth, in particular wherein the throttle body of the adjustment mechanism (35) and/or the central mouth of the central feed tube (33) are/is arranged in or as far as the region of the connection flat tube (3) and/or the diffusor-entry flat tube (6).

16. System composed of a ceramic wall element having a ceramic injector insert opening (7), configured for insertion of a combustion-gas injector (100), and a combustion-gas injector (100), for a regeneratively heated industrial furnace (1000), wherein, in the system,
- the combustion-gas injector (100) is designed according to one of Claims 1 to 15, and
- the transverse extent (Q) of the flat longitudinal diffusor (4) is intended for horizontal orientation (HO), and the height extent (H) of the flat longitudinal diffusor (4) is intended for vertical orientation (VE), in the industrial furnace (1000).

## Revendications

1. Injecteur de gaz de combustion (100) pour le chauffage d'un four industriel (1000) chauffé par régénération avec un élément de paroi céramique avec une ouverture d'insertion d'injecteur céramique, l'injecteur de gaz de combustion (100) présentant un tube d'amenée de gaz (1) et une embouchure (2), dont la liaison (V) est formée avec un diffuseur allongé, le diffuseur allongé présentant un tube de diffuseur métallique refroidissable et réalisant l'embouchure (2),
- le diffuseur allongé étant réalisé sous la forme d'un diffuseur allongé plat (4), le tube de diffuseur étant formé avec un tube plat de sortie de diffuseur (5) et un tube plat d'entrée de diffuseur (6),
- le tube plat de sortie de diffuseur (5) et le tube plat d'entrée de diffuseur (6) présentant une extension transversale (Q) et une extension en hauteur (H),
- un premier rapport entre une mesure d'extension transversale ouverte et une mesure d'extension en hauteur ouverte se situant dans une plage comprise entre 5 et 30,
- le diffuseur allongé étant formé avec un angle d'ouverture de jet libre, et
- l'angle d'ouverture de jet libre (w1, w2) s'ouvrant dans l'extension en hauteur (H) et/ou dans l'extension transversale (Q) du diffuseur allongé plat (4), à savoir du tube plat de sortie de diffuseur (5), et
- le tube de diffuseur étant prévu pour former une fermeture vers l'ouverture d'insertion d'injecteur céramique (7) au niveau de l'embouchure (2) de l'injecteur de gaz de combustion, et
- au moins le tube plat de sortie de diffuseur (5) du diffuseur allongé plat (4) étant entouré, le long de toute son extension axiale (E1) entre l'embouchure (2) et la limite (G1) entre le tube plat de sortie de diffuseur (5) et le tube plat d'entrée de diffuseur (6), par une enveloppe de refroidissement (21) pouvant être traversée par un fluide de refroidissement liquide, l'enveloppe de refroidissement (21) étant prévue avec le tube de diffuseur pour former une fermeture vers l'ouverture d'insertion d'injecteur céramique (7) au niveau de l'embouchure (2) de l'injecteur de gaz de combustion (100).

2. Injecteur de gaz de combustion selon la revendication 1, l'extension transversale (Q) et l'extension en hauteur (H) étant présentes au moins au niveau d'une limite (G1) entre le tube plat de sortie de diffuseur (5) et le tube plat d'entrée de diffuseur (6), et le rapport étant présent au moins au niveau de la limite (G1) et dans la zone du tube plat d'entrée de diffuseur (6) jusqu'à une limite (G2) vers un tube plat de raccordement (3).

3. Injecteur de gaz de combustion selon la revendication 1 ou 2, l'enveloppe de refroidissement pouvant être traversée par un fluide de refroidissement liquide étant refroidissable à l'eau et le fluide de refroidissement étant de l'eau.

4. Injecteur de gaz de combustion selon l'une quelconque des revendications 1 à 3, le tube de diffuseur étant prévu pour former une fermeture sans contact vers l'ouverture d'insertion d'injecteur céramique (7) au niveau de l'embouchure (2) de l'injecteur de gaz de combustion, le tube plat de sortie de diffuseur (5) du diffuseur allongé plat (4) étant entouré par l'enveloppe de refroidissement (21), qui est également prévue pour former une fermeture sans contact vers l'ouverture d'insertion d'injecteur céramique (7) au niveau de l'embouchure (2) de l'injecteur de gaz de combustion (100) .

5. Injecteur de gaz de combustion selon l'une quelconque des revendications 1 à 4, le tube plat de sortie de diffuseur (5) présentant également une extension transversale et une extension en hauteur dans la zone de l'embouchure (2), l'extension transversale étant prévue pour une orientation horizontale et l'extension en hauteur pour une orientation verticale dans le four industriel,
- au niveau de l'embouchure (2), un deuxième rapport entre une mesure d'extension transversale ouverte et une mesure d'extension en hauteur ouverte étant inférieur au premier rapport entre la mesure d'extension transversale ouverte et la mesure d'extension en hauteur ouverte au niveau de la limite (G1) entre le tube plat de sortie de diffuseur (5) et le tube plat d'entrée de diffuseur (6), le deuxième rapport se situant dans une plage comprise entre 5 et 20.

6. Injecteur de gaz de combustion selon l'une quelconque des revendications 1 à 5, un premier angle d'ouverture de jet libre (w1) dans l'extension en hauteur (H) se trouvant dans la plage allant de 0° à 25°, de préférence de 10° à 25°, et/ou un deuxième angle d'ouverture de jet libre (w2) dans l'extension transversale (Q) se trouvant dans la plage allant de 0° à 15°, notamment dans la plage allant de 0° à 5°, l'un des angles d'ouverture de jet libre (w1, w2) dans l'extension en hauteur (H) et dans l'extension transversale (Q) présentant une valeur finale.

7. Injecteur de gaz de combustion selon l'une quelconque des revendications 1 à 6,
- un tube plat de raccordement (3) du diffuseur allongé plat (4) s'aplatissant d'une section transversale ronde du tube d'amenée de gaz (1) à une section transversale aplatie par rapport à celle-ci au niveau de la limite (G2) vers le tube plat d'entrée de diffuseur (6), le tube plat de raccordement (3) présentant une section transversale ronde du côté du tube d'amenée de gaz (1) et une section transversale aplatie par rapport à celle-ci du côté du tube plat d'entrée de diffuseur (6), le tube plat de raccordement (3) se rétrécissant dans l'extension en hauteur de la section transversale ronde à la section transversale aplatie et s'élargissant dans l'extension transversale de la section transversale ronde à la section transversale aplatie.

8. Injecteur de gaz de combustion selon la revendication 7, le tube plat de raccordement (3)
- présentant, au moins au niveau de la limite (G2) vers le tube plat d'entrée de diffuseur (6), un angle d'ouverture (w3) dans l'extension transversale (Q) dans la plage allant de 10° à 60°, et/ou
- présentant, au moins au niveau de la limite (G2) vers le tube plat d'entrée de diffuseur (6), tout comme le tube plat d'entrée de diffuseur (6), le premier rapport entre la mesure d'extension transversale ouverte et la mesure d'extension en hauteur ouverte dans une plage comprise entre 5 et 30.

9. Injecteur de gaz de combustion selon l'une quelconque des revendications 1 à 8, le tube plat d'entrée de diffuseur (6) du diffuseur allongé plat (4) étant entouré dans sa majeure partie, notamment pratiquement le long de toute son extension axiale (E2), entre la limite (G1) entre le tube plat de sortie de diffuseur (5) et le tube plat d'entrée de diffuseur (6) et la limite (G2) entre le tube plat d'entrée de diffuseur (6) et le tube plat de raccordement (3), par une autre ou l'enveloppe de refroidissement (21), notamment refroidissable à l'eau.

10. Injecteur de gaz de combustion selon l'une quelconque des revendications 1 à 9, le tube plat d'entrée de diffuseur (6) présentant des parois de tube guidées parallèlement dans l'extension transversale et dans l'extension en hauteur, notamment des parois de tube guidées parallèlement sont entièrement présentes entre une limite (G2) au niveau du tube plat de raccordement (3) et une limite (G1) au niveau du tube plat de sortie de diffuseur (5) .

11. Injecteur de gaz de combustion selon l'une quelconque des revendications 1 à 10, l'angle d'ouverture de jet libre (w1, w2), notamment le premier et/ou le deuxième, ne s'ouvrant que dans l'extension en hauteur, une paroi de tube du diffuseur allongé plat (4), notamment du tube plat de sortie de diffuseur (5), étant guidée parallèlement dans l'extension transversale.

12. Injecteur de gaz de combustion selon l'une quelconque des revendications 1 à 11, l'enveloppe de refroidissement refroidissable à l'eau étant réalisée à deux enveloppes, une enveloppe de refroidissement d'arrivée intérieure refroidissable à l'eau (21, 23) et une enveloppe de refroidissement d'évacuation extérieure refroidissable à l'eau (22, 26) étant en liaison d'échange de fluide de refroidissement, notamment par l'intermédiaire d'ouvertures radiales.

13. Injecteur de gaz de combustion selon l'une quelconque des revendications 1 à 12,
- l'enveloppe de refroidissement se rétrécissant dans l'extension en hauteur de telle sorte que, dans l'extension en hauteur et/ou dans l'extension transversale, l'angle d'ouverture de jet libre qui s'ouvre est compensé, et/ou
- une dimension extérieure du tube plat de sortie de diffuseur (5) se rétrécissant vers l'embouchure ou s'étendant parallèlement, et/ou
- une dimension extérieure du tube plat d'entrée de diffuseur (6) s'étendant parallèlement vers l'embouchure et une dimension extérieure du tube plat de sortie de diffuseur (5) se rétrécissant.

14. Injecteur de gaz de combustion selon l'une quelconque des revendications 1 à 13, le tube d'amenée de gaz (1) et/ou le tube plat de raccordement (3) présentant un mécanisme de réglage intérieur (35) et/ou un tube d'amenée centrale (33) pour l'étranglement et/ou l'injection réglables d'un flux.

15. Injecteur de gaz de combustion selon l'une quelconque des revendications 1 à 14, le tube d'amenée de gaz (1) et/ou le tube plat de raccordement (3) présentant un corps d'étranglement et/ou une embouchure centrale pour l'étranglement et/ou l'injection réglables d'un flux, notamment le corps d'étranglement du mécanisme de réglage (35) et/ou l'embouchure centrale du tube d'amenée centrale (33) étant agencés dans ou jusqu'à la zone du tube plat de raccordement (3) et/ou du tube plat d'entrée de diffuseur (6).

16. Système composé d'un élément de paroi céramique avec une ouverture d'insertion d'injecteur céramique (7), réalisée pour l'insertion d'un injecteur de gaz de combustion (100), et un injecteur de gaz de combustion (100), pour un four industriel (1000) chauffé par régénération, dans le système
- l'injecteur de gaz de combustion (100) étant réalisé selon l'une quelconque des revendications 1 à 15, et
- l'extension transversale (Q) du diffuseur allongé plat (4) étant prévue pour l'orientation horizontale (HO) et l'extension en hauteur (H) du diffuseur allongé plat (4) pour l'orientation verticale (VE) dans le four industriel (1000).
